(19) Europäisches Patentamt
European Patent Office
Office européen des brevets

(11) **EP 4 564 756 A1**

(12) **EUROPEAN PATENT APPLICATION**
published in accordance with Art. 153(4) EPC

(43) Date of publication:
**04.06.2025 Bulletin 2025/23**

(21) Application number: **22952578.7**

(22) Date of filing: **29.07.2022**

(51) International Patent Classification (IPC):
***H04L 27/00*** *(2006.01)*

(52) Cooperative Patent Classification (CPC):
**H04L 27/00**

(86) International application number:
**PCT/CN2022/109262**

(87) International publication number:
**WO 2024/021133 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **INDICATION METHOD AND APPARATUS, DEVICE, AND STORAGE MEDIUM**

(57) Disclosed in embodiments of the present invention are an indication method and apparatus, a device, and a storage medium, which can be applied to a communication system. The method includes: acquiring codebook parameter information indicated by a network device, the codebook parameter information including the number of codebook parameters configured for a transmission/reception point (TRP) or TRP group; and sending indication information to the network device, the indication information being used for indicating an index value of a codebook parameter selected by a terminal device for the TRP or TRP group, and the index value being related to the number of codebook parameters. Implementation of the method of the present invention can effectively improve the indication effect in respect of a codebook parameter while reducing the indication overhead corresponding to the codebook parameter.

obtaining codebook parameter information indicated by a network device, wherein the codebook parameter information comprises a numeric count of codebook parameters configured for a transmission reception point (TRP) or TRP group ⟶ S102

sending indication information to the network device, wherein the indication information indicates an index of a codebook parameter selected by the terminal for the TRP or TRP group, and the index is related to the numeric count of codebook parameters ⟶ S202

FIG. 2

**Description**

**FIELD**

The present invention relates to the field of communication technologies, and in particular to an indication method, apparatus and device, and a storage medium.

**BACKGROUND**

In the communication system, a received signal strength for a user at a cell edge may be low, which results in a poor experience for the user at the edge and affects a frequency efficiency of the system. In order to improve edge coverage and provide balanced service quality for each user in a service area, multi-point cooperative transmission technology may be used. Different from single point transmission, such as a single transmission reception point (TRP) or panel, multi-point collaborative transmission refers to that multiple TRPs/panels provide data and serve for one user. The multi-point cooperative transmission technology may be roughly divided into two types: coherent joint transmission (CJT) and non-coherent joint transmission (NCJT). The so-called CJT means that each data stream will be mapped to the m-TRPs/panels participating in collaboration via a weighted vector. The CJT is equivalent to splicing multiple sub-arrays into a higher-dimensional virtual array to obtain higher shaping or precoding gains.

When the existing technology is adopted directly, in a codebook-based precoding process, overhead of indication of codebook parameters is relatively large.

**SUMMARY**

The present invention provides an indication method, apparatus and device, a chip system, a storage medium, a computer program and a computer program product, which may be applied in the field of communication technologies, and can reduce overhead of indication corresponding to codebook parameters and effectively improve an indication effect of the codebook parameters.

According to a first aspect of embodiments of the present invention, there is provided an indication method, performed by a terminal, including: obtaining codebook parameter information indicated by a network device, where the codebook parameter information includes a numeric count of codebook parameters configured for a transmission reception point (TRP) or TRP group; and sending indication information to the network device, where the indication information indicates an index of a codebook parameter selected by the terminal for the TRP or TRP group, and the index is related to the numeric count of codebook parameters.

In an embodiment, the codebook parameter includes at least one of: a frequency domain (FD) basis vector; a spatial domain (SD) basis vector; an SD and FD basis vector pair; or a channel state information-reference signal (CSI-RS) port.

In an embodiment, the indication information includes at least one of: FD basis vector indication information; SD basis vector indication information; SD and FD basis vector pair indication information; CSI-RS port indication information; indication information for a starting position of a window corresponding to each TRP of multiple TRPs, where a candidate FD basis vector is within one or more windows; or indication information for a starting position of a window corresponding to each TRP group of multiple TRP groups, where a candidate FD basis vector is within one or more windows.

In an embodiment, the FD basis vector indication information indicates at least one of: an index of an FD basis vector corresponding to a reference TRP; an index of an FD basis vector corresponding to a reference TRP group; an index of an FD basis vector corresponding to each TRP of remaining TRPs; an index of an FD basis vector corresponding to each TRP group of remaining TRP groups; an index of an FD basis vector corresponding to each TRP of the multiple TRPs; an index of an FD basis vector corresponding to each TRP group of the multiple TRP groups; an index of a relative FD basis vector corresponding to each TRP of the multiple TRPs; an index of a relative FD basis vector corresponding to each TRP group of the multiple TRP groups; or an index of a reference FD basis vector; where the reference TRP and the remaining TRP belong to the multiple TRPs, the reference TRP group and the remaining TRP group belong to the multiple TRP groups, and the multiple TRPs or the multiple TRP groups provide a data service to the terminal.

In an embodiment, the method further includes: obtaining the index of the relative FD basis vector corresponding to each TRP by calculating a difference between the index of the FD basis vector corresponding to each TRP and the index of the reference FD basis vector; obtaining the index of the relative FD basis vector corresponding to each TRP group by calculating a difference between the index of the FD basis vector corresponding to each TRP group and the index of the reference FD basis vector.

In an embodiment, the codebook parameter information further includes a reference numeric count, the numeric count of codebook parameters includes a numeric count of FD basis vectors configured for each TRP or each TRP group; and sending the indication information to the network device includes: sending the FD basis vector indication information to the network device according to the reference numeric count and the numeric count of FD basis vectors, where the FD basis vector indication information indicates at least one of: the index of the FD basis vector corresponding to the reference TRP; the index of the FD basis vector corresponding to the reference TRP group; the index of the FD basis vector corresponding to each TRP of remaining TRPs; or the index of the FD basis vector corresponding to each TRP group of remaining TRP groups.

In an embodiment, the codebook parameter information further includes a reference numeric count; the numeric count of codebook parameters includes a numeric count of FD basis vectors configured for the reference TRP or the reference TRP group; and the method further includes: obtaining a first indication value by processing the reference numeric count and the numeric count of FD basis vectors configured for the reference TRP or reference TRP group according to a first indication method. The first indication value indicates the index of the FD basis vector corresponding to the reference TRP or the reference TRP group. The first indication method includes:

$$\left\lceil \log_2 C_{N_3-1}^{M_i-1} \right\rceil;$$

where $C_{N_3-1}^{M_i-1}$ represents selecting $(M_i-1)$ FD basis vectors from $(N_3-1)$ FD basis vectors, $\lceil \ \rceil$ represents rounding up to an integer, $N_3$ represents the reference numeric count, $M_i$ represents the numeric count of FD basis vectors configured for the reference TRP or reference TRP group, i represents an index of the reference TRP in the multiple TRPs or represents an index of the reference TRP group of the multiple TRP groups.

In an embodiment, the codebook parameter information further includes a reference numeric count; the numeric count of codebook parameters includes a numeric count of FD basis vectors configured for each TRP of remaining TRPs or each TRP group of remaining TRP groups; and the method further includes: obtaining a second indication value by processing the reference numeric count and the numeric count of FD basis vectors configured for each TRP of remaining TRPs or each TRP group of remaining TRP groups according to a second indication method. The second indication value indicates the index of the FD basis vector corresponding to each TRP of remaining TRPs or each TRP group of remaining TRP groups. The second indication method includes:

$$\left\lceil \log_2 C_{N_3}^{M_i} \right\rceil;$$

where $C_{N_3}^{M_i}$ represents selecting $M_i$ FD basis vectors from $N_3$ FD basis vectors, $\lceil \ \rceil$ represents rounding up to an integer, $N_3$ represents the reference numeric count, $M_i$ represents the numeric count of FD basis vectors configured for each TRP of remaining TRPs or each TRP group of remaining TRP groups, i represents an index of a remaining TRP in the multiple TRPs or represents an index of each TRP group of remaining TRP groups of the multiple TRP groups.

In an embodiment, the codebook parameter information further includes a reference numeric count; the numeric count of codebook parameters includes a total numeric count of FD basis vectors configured for all of the multiple TRPs or TRP groups; and sending the indication information to the network device includes: sending the FD basis vector indication information according to the reference numeric count and/or the total numeric count of FD basis vectors, where the FD basis vector indication information indicates at least one of: the index of the FD basis vector corresponding to each TRP of the multiple TRPs; the index of the FD basis vector corresponding to each TRP group of the multiple TRP groups; the index of the relative FD basis vector corresponding to each TRP of the multiple TRPs; the index of the relative FD basis vector corresponding to each TRP group of the multiple TRP groups; or the index of the reference FD basis vector.

In an embodiment, the codebook parameter information further includes a reference numeric count; the numeric count of codebook parameters includes a total numeric count of FD basis vectors configured for all of the multiple TRPs or TRP groups; and the method further includes: obtaining a third indication value by processing the reference numeric count and the total numeric count of FD basis vectors according to a third indication method. The third indication value indicates the index of the FD basis vector corresponding to each TRP or each TRP group. The third indication method includes:

$$\left\lceil \log_2 C_{N_3-1}^{M-1} \right\rceil;$$

where $C_{N_3-1}^{M-1}$ represents selecting (M-1) FD basis vectors from ($N_3$-1) FD basis vectors, ⌈ ⌉ represents rounding up to an integer, $N_3$ represents the reference numeric count, M represents the total numeric count of FD basis vectors configured for all of the multiple TRPs or TRP groups.

In an embodiment, the codebook parameter information further includes a reference numeric count; and the method further includes: obtaining a fourth indication value by processing the reference numeric count according to a fourth indication method. The fourth indication value indicates the index of the reference FD basis vector. The fourth indication method includes:

$$\left\lceil \log_2^{C_{N_3}^1} \right\rceil;$$

where $C_{N_3}^1$ represents selecting one FD basis vector from $N_3$ FD basis vectors, ⌈ ⌉ represents rounding up to an integer, and $N_3$ represents the reference numeric count.

In an embodiment, the reference numeric count is one of: a numeric count of precoding matrix indicators (PMIs); or a numeric count of FD basis vectors contained in a sliding window.

In an embodiment, the reference TRP is one of: a TRP corresponding to a first layer 1 reference signal receiving power (L1-RSRP) with a maximum value among a plurality of first L1-RSRPs, and each first L1-RSRP corresponding to one respective TRP; a TRP corresponding to a first combination coefficient with a maximum amplitude among a plurality of first combination coefficients; a TRP corresponding to a maximum first reference amplitude among a plurality of first reference amplitudes; or a TRP corresponding to a minimum or maximum first description value among a plurality of first description values, and each first description value corresponding to one respective TRP.

In an embodiment, the first description value is one of: an index of an FD basis vector corresponding to the TRP; a resource identifier (ID) in a CSI-RS resource corresponding to the TRP; or a port group index corresponding to the TRP.

In an embodiment, the reference TRP group is one of: a TRP group corresponding to a second L1-RSRP with a maximum value among a plurality of second L1-RSRPs, and each second L1-RSRP corresponding to one respective TRP group; a TRP group corresponding to a second combination coefficient with a maximum amplitude among a plurality of second combination coefficients; a TRP group corresponding to a maximum second reference amplitude among a plurality of second reference amplitudes; or a TRP group corresponding to a minimum or maximum second description value among a plurality of second description values, and each second description value corresponding to one respective TRP group.

In an embodiment, the second description value is one of: an index of an FD basis vector corresponding to the TRP group; a resource identifier (ID) in a CSI-RS resource corresponding to the TRP group; or a port group index corresponding to the TRP group.

In an embodiment, the SD basis vector or SD and FD basis vector pair indication information indicates at least one of: an index of an SD basis vector corresponding to each TRP; an index of an FD basis vector corresponding to each TRP; an index of an SD and FD basis vector pair corresponding to each TRP; an index of an SD basis vector corresponding to each TRP group; an index of an FD basis vector corresponding to each TRP group; or an index of an SD and FD basis vector pair corresponding to each TRP group.

In an embodiment, a basis vector is a discrete Fourier transform (DFT) basis vector, and sending the indication information to the network device includes: sending DFT basis vector indication information according to the numeric count of codebook parameters, where the DFT basis vector indication information indicates one of: the index of the SD basis vector corresponding to each TRP; the index of the FD basis vector corresponding to each TRP; the index of the SD basis vector corresponding to each TRP group; or the index of the FD basis vector corresponding to each TRP group.

In an embodiment, sending the indication information to the network device includes: sending the SD and FD basis vector pair indication information according to the numeric count of codebook parameters, where the SD and FD basis vector pair indication information indicates at least one of: the index of the SD and FD basis vector pair corresponding to each TRP; or the index of the SD and FD basis vector pair corresponding to each TRP group.

In an embodiment, the numeric count of codebook parameters includes a numeric count of SD and FD basis vector pairs configured for each TRP or each TRP group, and a total numeric count of SD and FD basis vector pairs configured for all of the multiple TRPs or TRP groups; and the method further includes: obtaining a fifth indication value by processing the total numeric count of SD and FD basis vector pairs and the numeric count of SD and FD basis vector pairs configured for each TRP or each TRP group according to a fifth indication method. The fifth indication value indicates an index of an SD and FD basis vector pair corresponding to each TRP or each TRP group. A fifth indication method includes:

$$\left\lceil \log_2 C_{\mathrm{X}}^{Y_i} \right\rceil;$$

where $C_{\mathrm{X}}^{Y_i}$ represents selecting $Y_i$ SD and FD basis vector pairs from X SD and FD basis vector pairs, $\lceil \ \rceil$ represents rounding up to an integer, X represents the total numeric count of SD and FD basis vector pairs configured for all of the multiple TRPs or TRP groups, $Y_i$ represents the numeric count of SD and FD basis vector pairs configured for each TRP or each TRP group, i represents an index of a TRP in the multiple TRPs or represents an index of each TRP group of the multiple TRP groups.

In an embodiment, a basis vector is an eigenvector, and the method further includes: determining an amplitude and/or a phase corresponding to each coefficient in the eigenvector; and sending eigenvector indication information according to the amplitude and/or the phase. The eigenvector indication information indicates one of: indication information for the amplitude corresponding to each coefficient; or indication information for the phase corresponding to each coefficient.

In an embodiment, the basis vector is an eigenvector, and the method further includes: determining a plurality of orthogonal basis vectors in the eigenvector, and a weight value corresponding to each orthogonal basis vector; and sending eigenvector indication information according to an orthogonal basis vector and a respective weight value.

In an embodiment, the method further includes: sending the indication information to the network device according to a first cycle; indicating a combination coefficient corresponding to a TRP to the network device according to a second cycle, where the first cycle is greater than the second cycle.

In an embodiment, a plurality of data transmission layers exist; where the indication information satisfies at least one of: being the same as CSI-RS port indication information corresponding to each data transmission layer; being the same as SD basis vector indication information corresponding to each data transmission layer; being different from FD basis vector indication information corresponding to each data transmission layer; being the same as or different from SD and FD basis vector pair indication information corresponding to each data transmission layer, where a basis vector is a DFT basis vector; or being the same as SD and FD basis vector pair indication information corresponding to each data transmission layer, where a basis vector is an eigenvector.

According to a second aspect of embodiments of the present invention, there is provided an indication method, performed by a network device, including: indicating codebook parameter information to a terminal, where the codebook parameter information includes a numeric count of codebook parameters configured for a transmission reception point (TRP) or TRP group; and receiving indication information sent by the terminal, where the indication information indicates an index of a codebook parameter selected by the terminal for the TRP or TRP group, and the index is related to the numeric count of codebook parameters.

In an embodiment, the codebook parameter includes at least one of: a frequency domain (FD) basis vector; a spatial domain (SD) basis vector; an SD and FD basis vector pair; or a channel state information-reference signal (CSI-RS) port.

In an embodiment, the indication information includes at least one of: FD basis vector indication information; SD basis vector indication information; SD and FD basis vector pair indication information; CSI-RS port indication information; indication information for a starting position of a window corresponding to each TRP of multiple TRPs, where a candidate FD basis vector is within one or more windows; or indication information for a starting position of a window corresponding to each TRP group of multiple TRP groups, where a candidate FD basis vector is within one or more windows.

In an embodiment, the FD basis vector indication information indicates at least one of: an index of an FD basis vector corresponding to a reference TRP; an index of an FD basis vector corresponding to a reference TRP group; an index of an FD basis vector corresponding to each TRP of remaining TRPs; an index of an FD basis vector corresponding to each TRP group of remaining TRP groups; an index of an FD basis vector corresponding to each TRP in the multiple TRPs; an index of an FD basis vector corresponding to each TRP group of the multiple TRP groups; an index of a relative FD basis vector corresponding to each TRP in the multiple TRPs; an index of a relative FD basis vector corresponding to each TRP group of the multiple TRP groups; or an index of a reference FD basis vector; where the reference TRP and the remaining TRP belong to the multiple TRPs, the reference TRP group and the remaining TRP group belong to the multiple TRP groups, and the multiple TRPs or the multiple TRP groups provide a data service to the terminal.

In an embodiment, the codebook parameter information further includes a reference numeric count, and the numeric count of codebook parameters is one of: a numeric count of FD basis vectors configured for each TRP or each TRP group; a total numeric count of FD basis vectors configured for all of the multiple TRPs or TRP groups; a numeric count of SD and FD basis vector pairs configured for each TRP or each TRP group; or a total numeric count of SD and FD basis vector pairs configured for all of the multiple TRPs or TRP groups.

In an embodiment, the reference numeric count is one of: a numeric count of precoding matrix indications (PMIs); or a numeric count of FD basis vectors contained in a sliding window.

In an embodiment, the SD basis vector or SD and FD basis vector pair indication information indicates at least one of: an index of an SD basis vector corresponding to each TRP; an index of an FD basis vector corresponding to each TRP; an index of an SD and FD basis vector pair corresponding to each TRP; an index of an SD basis vector corresponding to each TRP group; an index of an FD basis vector corresponding to each TRP group; or an index of an SD and FD basis vector pair corresponding to each TRP group.

According to a third aspect of embodiments of the present invention, there is provided an indication device, having some or all functions of the terminal for realizing the method described in the first aspect. For example, the function of the device may be the function for realizing part or all of the embodiments of the present invention, or may be the function for separately realizing any one of the embodiments of the present invention. The functions described above may be implemented by hardware, or may be implemented by software executed by corresponding hardware. The hardware or software includes at least one unit or module corresponding to the above functions.

Optionally, in an embodiment of the present invention, the structure of the indication device may include a transceiving module and a processing module, and the processing module is configured to support the indication device to perform corresponding functions in the above method. The transceiving module is configured to support communication between the indication device and other devices. The indication device may further include a storage module coupled to the transceiving module and the processing module, which stores necessary computer programs and data for the indication device.

For example, the processing module may be a processor, the transceiving module may be a transceiver or a communication interface, and the storage module may be a memory.

According to a fourth aspect of embodiments of the present invention, there is provided an indication device, having some or all functions of the network device for realizing the method described in the second aspect. For example, the function of the device may be the function for realizing part or all of the embodiments of the present invention, or may be the function for separately realizing any one of the embodiments of the present invention. The functions described above may be implemented by hardware, or may be implemented by software executed by corresponding hardware. The hardware or software includes at least one unit or module corresponding to the above functions.

Optionally, in an embodiment of the present invention, the structure of the indication device may include a transceiving module and a processing module, and the processing module is configured to support the indication device to perform corresponding functions in the above method. The transceiving module is configured to support communication between the indication device and other devices. The indication device may further include a storage module coupled to the transceiving module and the processing module, which stores necessary computer programs and data for the indication device.

According to a fifth aspect of embodiments of the present invention, there is provided a communication device including a processor. When the processor invokes a computer program stored in a memory, the indication method described in the first aspect is performed.

According to a sixth aspect of embodiments of the present invention, there is provided a communication device including a processor. When the processor invokes a computer program stored in a memory, the indication method described in the second aspect is performed.

According to a seventh aspect of embodiments of the present invention, there is provided a communication device. The communication device includes a processor and a memory storing a computer program that, when executed by the processor, causes the communication device to perform the indication method described in the first aspect.

According to an eighth aspect of embodiments of the present invention, there is provided a communication device. The communication device includes a processor and a memory storing a computer program that, when executed by the processor, causes the communication device to perform the indication method described in the second aspect.

According to a ninth aspect of embodiments of the present invention, there is provided a communication device. The communication device includes a processor and an interface circuit. The interface circuit is configured to receive code instructions and transmit them to the processor. The processor is configured to run the code instructions to cause the device to perform the indication method described in the first aspect.

According to a tenth aspect of embodiments of the present invention, there is provided a communication device. The communication device includes a processor and an interface circuit. The interface circuit is configured to receive code instructions and transmit them to the processor. The processor is configured to run the code instructions to cause the device to perform the indication method described in the second aspect.

According to an eleventh aspect of embodiments of the present invention, there is provided a communication system. The communication system includes the indication device described in the third aspect and the indication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

According to a twelfth aspect of embodiments of the present invention, there is provided a computer-readable storage medium having stored therein instructions for the above terminal. When the instructions are executed, the terminal performs the indication method described in the first aspect.

According to a thirteenth aspect of embodiments of the present invention, there is provided a readable storage medium having stored therein instructions for the above network device. When the instructions are executed, the network device performs the indication method described in the second aspect.

According to a fourteenth aspect of embodiments of the present invention, there is provided a computer program product including a computer program that, when run on a computer, causes the computer to perform the indication method described in the first aspect.

According to a fifteenth aspect of embodiments of the present invention, there is provided a computer program product including a computer program that, when run on a computer, causes the computer to perform the indication method described in the second aspect.

According to a sixteenth aspect of embodiments of the present invention, there is provided a chip system, including at least one processor and an interface, configured to support the terminal to realize the functions involved in the first aspect, for example, determine or process at least one of data and information involved in the above method.

In a possible design, the chip system further includes a memory, and the memory is configured to store necessary computer programs and data of the terminal. The chip system may be formed by a chip, or may include a chip and other discrete devices.

According to a seventeenth aspect of embodiments of the present invention, there is provided a chip system, including at least one processor and an interface, configured to support the network device to realize the functions involved in the second aspect, for example, determine or process at least one of data and information involved in the above method.

In a possible design, the chip system further includes a memory, and the memory is configured to store necessary computer programs and data of the network device. The chip system may be formed by a chip, or may include a chip and other discrete devices.

According to an eighteenth aspect of embodiments of the present invention, there is provided a computer program that, when run on a computer, causes the computer to perform the indication method described in the first aspect.

According to a nineteenth aspect of embodiments of the present invention, there is provided a computer program that, when run on a computer, causes the computer to perform the indication method described in the second aspect.

In conclusion, the indication methods, apparatuses, devices, chip systems, storage media, computer programs and computer program products provided in the embodiments of the present invention may achieve the following technical effects.

The codebook parameter information indicated by the network device is obtained. The codebook parameter information includes the numeric count of the codebook parameters configured for the TRP or TRP group. The instruction information is sent to the network device. The indication information indicates the index of the codebook parameter selected by the terminal for the TRP or TRP group. The index is related to the numeric count of the codebook parameters. In this way, overhead of indication corresponding to the codebook parameter is reduced and an indication effect of the codebook parameter is effectively improved.

BRIEF DESCRIPTION OF THE DRAWINGS

In order to more clearly illustrate technical solutions in embodiments of the present invention or in the background, drawings required to be used in the embodiments of the present invention or in the background will be described below.

FIG. 1 is a schematic diagram of an architecture of a communication system provided by an embodiment of the present invention.
FIG. 2 is a flowchart of an indication method provided by an embodiment of the present invention.
FIG. 3 is a flowchart of an indication method provided by another embodiment of the present invention.
FIG. 4 is a flowchart of an indication method provided by a further embodiment of the present invention.
FIG. 5 is a flowchart of an indication method provided by a further embodiment of the present invention.
FIG. 6 is a flowchart of an indication method provided by a further embodiment of the present invention.
FIG. 7 is a flowchart of an indication method provided by a further embodiment of the present invention.
FIG. 8 is a flowchart of an indication method provided by a further embodiment of the present invention.
FIG. 9 is a flowchart of an indication method provided by a further embodiment of the present invention.
FIG. 10 is a flowchart of an indication method provided by a further embodiment of the present invention.
FIG. 11 is a block diagram of a communication device provided by an embodiment of the present invention.
FIG. 12 is a block diagram of a communication device provided by another embodiment of the present invention.
FIG. 13 is a block diagram of a chip provided by an embodiment of the present invention.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. They are merely examples of devices and methods consistent with some aspects of embodiments of the present invention as recited in the appended claims.

Terms used herein in the embodiments of the present invention are for the purpose of describing specific embodiments, but should not be construed to limit the embodiments of the present invention. As used in embodiments of the present invention and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

For ease of understanding, terminologies involved in the present invention is first introduced.

1. Codebook

A codebook refers to putting available codes together to obtain a table, and using serial numbers to number different codes in the table. In this way, according to a serial number, a relevant code may be searched for in the resulting table. When designing a communication system, several precoding matrices may be used to form a codebook, and a transmitter and a receiver determine contents of the codebook in advance. A terminal may measure a downlink channel according to a channel state information-reference signal (CSI-RS) to obtain a channel matrix. Based on the preset codebook, the terminal may select, according to a preconfigured optimization criteria, a precoding matrix which is most-matched with a current channel condition from the codebook, and indicate a precoding matrix indicator (PMI) to a network device via a feedback link.

2. Frequency domain (FD)

Frequency domain is a coordinate system used to describe a frequency feature of a signal. In electronics, control systems engineering, and statistics, a frequency domain plot shows a signal amount in each frequency band within a frequency range. The frequency domain representation may further include information on a phase shift of each sinusoid, allowing frequency components to be recombined to restore an original time signal.

3. Basis vector

Basis is a basic tool for describing and characterizing a vector space. The basis of the vector space is a special subset, and an element of the basis is called a basis vector.

In order to better understand the indication method disclosed in the embodiments of the present invention, the communication system to which the embodiments of the present invention are applicable is firstly described below.

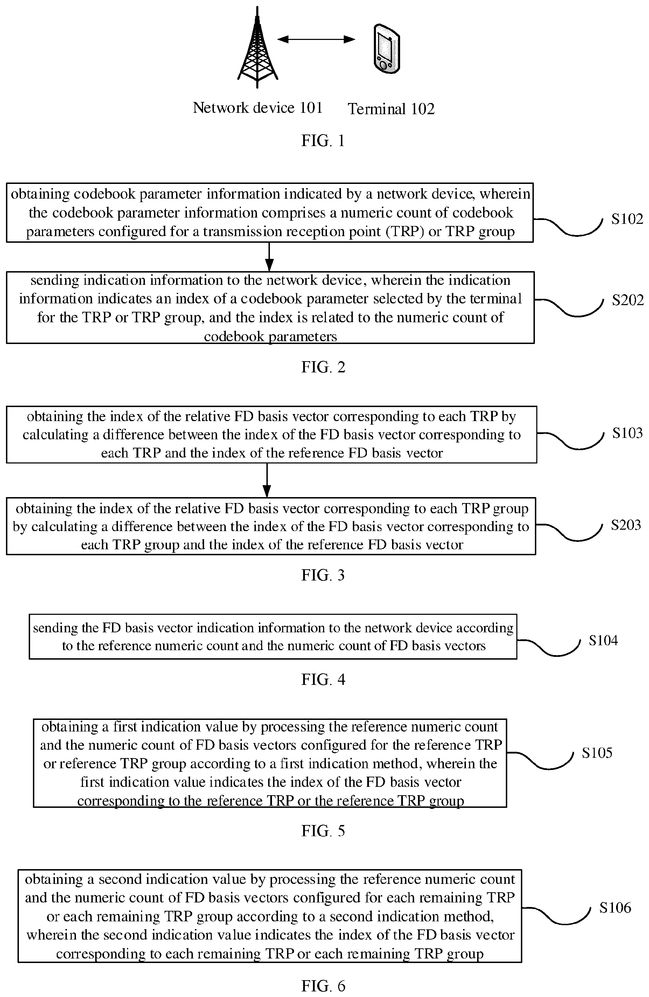

Referring to FIG. 1, FIG. 1 is a schematic diagram of an architecture of a communication system provided by an embodiment of the present invention. The communication system may include, but not limited to, a network device and a terminal. The number and form of the devices shown in FIG. 1 are only example and do not constitute a limitation to the embodiments of the present invention. In practical applications, the system may include two or more network devices, and two or more terminals. In an example, the communication system shown in FIG. 1 includes one network device 101 and one terminal 102.

It should be noted that the technical solutions of the embodiments of the present invention may be applied to various communication systems, for example, a long term evolution (LTE) system, a fifth generation (5G) mobile communication system, a 5G new radio (NR) system, or other future new mobile communication systems.

The network device 101 in the embodiments of the present invention is an entity at a network side for transmitting or receiving signals. For example, the network device 101 may be an evolved NodeB (eNB), a transmission reception point (TRP), a next generation NodeB (gNB) in an NR system, a base station in other future mobile communication systems, or a wireless fidelity (Wi-Fi) access nodes in the system. Specific technologies and specific device forms adopted by the network device are not limited in the embodiments of the present invention.

The network device provided in the embodiments of the present invention may be composed of a central unit (CU) and a distributed unit (DU), where the CU may also be called a control unit. The CU-DU structure may divide the network device, such as protocol layers of the base station, and functions of some protocol layers are arranged in the CU for centralized control, and functions of a part of or all the remaining protocol layers are distributed in the DU(s), and the CU centrally controls the DU(s).

The terminal 102 in the embodiments of the present invention is an entity at a user side for receiving or transmitting signals, such as a mobile phone. The terminal may also be called a terminal device, a user equipment (UE), a mobile station (MS), and a mobile terminal (MT). The terminal may be a car with a communication function, a smart car, a mobile phone, a wearable device, a pad, a computer with a wireless transceiver function, a virtual reality (VR) terminal, an augmented reality (AR) terminal, a wireless terminal in an industrial control, a wireless terminal in self-driving, a wireless terminal in a remote medical surgery, a wireless terminal in a smart grid, a wireless terminal in safe transportation, a wireless terminal in a smart city, or a wireless terminal in a smart home.

Specific technologies and specific device forms adopted by the terminal are not limited in the embodiments of the present invention.

It can be understood that the communication system described in the embodiments of the present invention is to illustrate the technical solutions of the embodiments of the present invention more clearly, and does not constitute a limitation on the technical solutions provided by the embodiments of the present invention. Those skilled in the art may understand that with the evolution of the system architecture and the emergence of new business scenarios, the technical solutions provided by the embodiments of the present invention are applicable to similar technical problems.

The indication method and device provided by the present invention will be described in detail below with reference to the accompanying drawings.

FIG. 2 is a flowchart of an indication method provided by an embodiment of the present invention. The method is performed by a terminal. The indication method in this embodiment may be applied to the terminal, such as a mobile phone, a tablet with a mobile communication function, and a smart watch, which is not limited herein.

As shown in FIG. 2, the method may include, but not limited to, the following steps.

In S102, codebook parameter information indicated by a network device is obtained. The codebook parameter information includes a numeric count of codebook parameters configured for a transmission reception point (TRP) or TRP group.

The codebook may be used as reference information in a precoding process. Based on the codebook, available codes may be combined into a table, and different codes in the table may be numbered with serial numbers, and a code may be searched for in the resulting table according to a respective serial number. The codebook parameter information refers to relevant information corresponding to a codebook parameter, such as a reporting priority of a codebook parameter and a reporting combination of codebook parameters, which is not limited herein.

A transmission reception point (TRP) refers to a network device that provides a communication service for a terminal device. A TRP group refers to a TRP combination formed by multiple TRPs, that is, a TRP group may include several TRPs. Multiple TRPs or multiple TRP groups provide the data service for the terminal device.

It can be understood that during the indication process, a numeric count of (i.e., the number of) existing codebook parameters may be more than one, and indicating different codebook parameters may affect the precoding process of the terminal device. When obtaining the codebook parameter information indicated by the network device, the terminal device may obtain the accurate number of the codebook parameters to effectively improve an accuracy of the indication process.

The embodiments of the present invention further provide an indication method, where the codebook parameter includes at least one of: a frequency domain (FD) basis vector, a spatial domain (SD) basis vector, an SD and FD basis vector pair, or a channel state information-reference signal (CSI-RS) port. In this way, practicality of the obtained codebook parameter(s) in the indication process may be effectively guaranteed.

It can be understood that in a coherent joint transmission process, a codebook-based precoding technology is usually used. The terminal may indicate an index of a selected codebook parameter which is reported for precoding calculation at a network device side. The codebook parameter may be for example the FD basis vector, the SD basis vector, the SD and FD basis vector pair, or the CSI-RS port.

Basis is a basic tool for describing and characterizing a vector space. The basis of the vector space is a special subset, and an element of the basis is called a basis vector.

The FD basis vector refers to a basis vector in a frequency domain dimension. The SD refers to a basis vector in a spatial domain dimension. The SD and FD basis vector pair refers to a combination of an SD basis vector and an FD basis vector.

The CSI-RS is a reference signal in the communication system. Since a wireless channel condition may be changed dynamically, the terminal needs to report a downlink channel condition it observes to the network device via the CSI, so that the network device may consider the channel quality during downlink scheduling. The CSI-RS port may refer to a port used to transmit the CSI-RS.

For example, when there are three TRPs simultaneously providing the service for the same user equipment (UE) based on the coherent joint transmission technology, channels from the UE to the three TRPs may be expressed as $H_1$, $H_2$ and $H_3$. When calculating the precoding of the UE, a combination of the three channels may be regarded as a higher-dimensional channel, $H = [H_1^T, H_2^T, H_3^T]^T$ and downlink data transmission precoding of the UE is calculated according to H.

When multiple TRPs perform the coherent joint transmission, the following optional codebook structures (referred as Alt1A, Alt1B, and Alt2) may be used to calculate the downlink data transmission precoding for the user,

$$\text{Alt1A:} \begin{bmatrix} (a_1 p_1) \times W_{1,1} \widetilde{W}_{2,1} W_{f,1}^H \\ \vdots \\ (a_N p_N) \times W_{1,N} \widetilde{W}_{2,N} W_{f,N}^H \end{bmatrix};$$

$$\text{Alt1B:} \begin{bmatrix} (a_1 p_1) \times W_{SF,1} \widetilde{W}_{2,1} \\ \vdots \\ (a_N p_N) \times W_{SF,N} \widetilde{W}_{2,N} \end{bmatrix};$$

$$\text{Alt2:} \begin{bmatrix} W_{1,1} & 0 & 0 & 0 \\ 0 & \ddots & 0 & 0 \\ 0 & 0 & & W_{1,N} \\ 0 & 0 & & \end{bmatrix} \widetilde{W}_2 W_f^H;$$

where $a_n$ and $p_n$ represent an amplitude factor and a phase factor corresponding to a $n^{th}$ TRP, respectively; $W_{1,n}$ represents one or more SD basis vectors or one or more unit vectors corresponding to the $n^{th}$ TRP; $\widetilde{W}_{2,n}$ represents a combination coefficient corresponding to the $n^{th}$ TRP; $W_{f,n}$ represents one or more FD basis vectors corresponding to the $n^{th}$ TRP; $W_{SF,n}$ represents one or more SD and FD basis vector pairs corresponding to the $n^{th}$ TRP; $\widetilde{W}_2$ represents a combination coefficient corresponding to N TRPs; and $W_f$ represents one or more FD basis vectors corresponding to N TRPs.

It can be understood that the above-mentioned SD basis vector and FD basis vector as well as the SD and FD basis vector pair have the following four design methods.

In Alt1, the SD basis vector and the FD basis vector are designed separately, and both the basis vectors are discrete Fourier transform (DFT) basis vectors used in Rel-16 Type II codebook.

In Alt2, the SD basis vector and the FD basis vector are designed jointly, and both the basis vectors are DFT basis vectors.

In Alt3, the SD basis vector and the FD basis vector are designed jointly, and both the basis vectors are eigenvectors.

In Alt4, the SD basis vector and the FD basis vector are designed separately, and both the basis vectors are eigenvectors.

In S202, indication information is sent to the network device. The indication information indicates an index of a codebook parameter selected by the terminal device for the TRP or TRP group, and the index is related to the numeric count of the codebook parameters.

The indication information may be generated by the terminal and sent to the network device, and is used to indicate relevant information of the codebook parameter(s) to the network device.

It can be understood that in this embodiment of the present invention, the number of TRPs may be more than one, and the number of TRP groups may be more than one.

An index is a separate, physical storage structure that ranks values of one or more columns in a database table. It refers to a set of values of one or more columns in the table and a corresponding list of logical pointers of data pages physically identifying these values in the table.

In the embodiments, the codebook parameter information indicated by the network device is obtained. The codebook parameter information includes the numeric count of the codebook parameters configured for the TRP or TRP group. The instruction information is sent to the network device. The indication information indicates the index of the codebook parameter selected by the terminal for the TRP or TRP group. The index is related to the numeric count of the codebook parameters. In this way, overhead of indication corresponding to the codebook parameter is reduced and an indication effect of the codebook parameter is effectively improved.

An embodiment of the present invention further provides an indication method, where the indication information includes at least one of: FD basis vector indication information; SD basis vector indication information; SD and FD basis vector pair indication information; CSI-RS port indication information; indication information for a starting position of a window corresponding to each TRP of multiple TRPs, where a candidate FD basis vector is within one or more windows; or indication information for a starting position of a window corresponding to each TRP group of multiple TRP groups, where a candidate FD basis vector is within one or more windows. In this way, the indication information may be suitable for personalized application scenarios and user needs, thus effectively improving indication flexibility.

A transmission layer refers to one of layers in an entire network architecture, which may provide a service for communication between processes in two hosts.

A window, also called a window function, may be used to take a signal of a specified size during signal processing.

An embodiment of the present invention further provides an indication method, where the FD basis vector indication information indicates at least one of: an index of an FD basis vector corresponding to a reference TRP; an index of an FD basis vector corresponding to a reference TRP group; an index of an FD basis vector corresponding to each TRP of remaining TRPs; an index of an FD basis vector corresponding to each TRP group of remaining TRP groups; an index of an FD basis vector corresponding to each TRP in the multiple TRPs; an index of an FD basis vector corresponding to each TRP group of the multiple TRP groups; an index of a relative FD basis vector corresponding to each TRP in the multiple TRPs; an index of a relative FD basis vector corresponding to each TRP group of the multiple TRP groups; or an index of a reference FD basis vector. The reference TRP and the remaining TRP belong to the multiple TRPs, the reference TRP group and the remaining TRP group belong to the multiple TRP groups, and the multiple TRPs or the multiple TRP groups provide a data service to the terminal. In this way, indication contents of the FD basis vector indication information may be greatly enriched and practicality of the FD basis vector indication information may be effectively improved, thus reducing indication overhead for indicating the FD basis vectors of multiple TRP/TRP groups.

FIG. 3 is a flowchart of an indication method provided by another embodiment of the present invention. The indication method in this embodiment may be applied in the terminal. As shown in FIG. 3, the method includes, but is not limited to, the following steps.

In S103, the index of the relative FD basis vector corresponding to each TRP is obtained by calculating a difference between the index of the FD basis vector corresponding to each TRP and the index of the reference FD basis vector.

In S203, the index of the relative FD basis vector corresponding to each TRP group is obtained by calculating a difference between the index of the FD basis vector corresponding to each TRP group and the index of the reference FD basis vector.

In this embodiment, the index of the relative FD basis vector corresponding to each TRP is obtained by calculating a difference between the index of the FD basis vector corresponding to each TRP and the index of the reference FD basis vector, and the index of the relative FD basis vector corresponding to each TRP group is obtained by calculating a difference between the index of the FD basis vector corresponding to each TRP group and the index of the reference FD basis vector. In this way, reliability of obtaining the index of the relative FD basis vector corresponding to each TRP or each TRP group may be effectively improved, and accuracy of the obtained index may be guaranteed.

FIG. 4 is a flowchart of an indication method provided by a further embodiment of the present invention. The indication method in this embodiment may be applied in the terminal. As shown in FIG. 4, the method includes, but is not limited to, the following step.

In S104, the FD basis vector indication information is sent to the network device according to a reference numeric count and a numeric count of FD basis vectors.

In this embodiment of the present invention, the codebook parameter information further includes the reference numeric count, the numeric count of codebook parameters includes the numeric count of FD basis vectors configured for each TRP or each TRP group.

The FD basis vector indication information indicates at least one of: an index of an FD basis vector corresponding to a reference TRP; an index of an FD basis vector corresponding to a reference TRP group; an index of an FD basis vector corresponding to each TRP of remaining TRPs; or an index of an FD basis vector corresponding to each TRP group of remaining TRP groups.

In the embodiments, by sending the FD basis vector indication information to the network device according to the reference numeric count and the numeric count of FD basis vectors, accuracy of the obtained FD basis vector indication information may be effectively improved according to the reference numeric count and the numeric count of FD basis vectors, and an effect on relevant information of the FD basis vector indicated by the obtained FD basis vector indication information may be guaranteed.

An embodiment of the present invention further provides an indication method, where the reference numeric count is one of: a numeric count of precoding matrix indicators (PMIs), or a numeric count of FD basis vectors included in a sliding window.

The PMI may be used only in a closed-loop spatial multiplexing transmission mode to allow the terminal to indicate a precoding matrix to be used in a precoding process performed by the network device for a physical downlink shared channel (PDSCH) of the terminal.

The sliding window refers to a window generated based on a sliding window algorithm, which may be used to operate on a string or array of a specific size. A length of the window may be pre-configured, and a starting point may be changed in real time, allowing the window to slide through objects to be processed.

FIG. 5 is a flowchart of an indication method provided by a further embodiment of the present invention. The indication method in this embodiment may be applied in the terminal. As shown in FIG. 5, the method includes, but is not limited to, the following step.

In S105, a first indication value is obtained by processing a reference numeric count and a numeric count of FD basis vectors configured for a reference TRP or reference TRP group according to a first indication method. The first indication value indicates an index of an FD basis vector corresponding to the reference TRP or the reference TRP group.

In the embodiments of the present invention, the codebook parameter information may further include the reference numeric count, and the numeric count of codebook parameters includes the numeric count of FD basis vectors configured for the reference TRP or the reference TRP group.

The method further includes:

$$\left\lceil \log_2 C_{N_3-1}^{M_i-1} \right\rceil;$$

where $C_{N_3-1}^{M_i-1}$ represents selecting $(N_3-1)$ FD basis vectors from $(M_i-1)$ FD basis vectors, ⌈ ⌉ represents rounding up to an integer, $N_3$ represents the reference numeric count, $M_i$ represents the numeric count of FD basis vectors configured for the reference TRP or reference TRP group, i represents an index of the reference TRP in the multiple TRPs or represents an index of the reference TRP group of the multiple TRP groups.

The first indication value refers to a value obtained by processing the reference numeric count and the numeric count of FD basis vectors configured for the reference TRP or reference TRP group based on the above-mentioned first indication method.

In this embodiment, the first indication value is obtained by processing the reference numeric count and the numeric count of FD basis vectors configured for the reference TRP or reference TRP group according to the first indication method, where the first indication value indicates the index of the FD basis vector corresponding to the reference TRP or the reference TRP group. In this way, the reference numeric count and the numeric count of FD basis vectors configured for the reference TRP or reference TRP group may be calculated and processed, and an indication accuracy for the index of the FD basis vector corresponding to the reference TRP or the reference TRP group may be effectively improved.

FIG. 6 is a flowchart of an indication method provided by a further embodiment of the present invention. The indication method in this embodiment may be applied in the terminal. As shown in FIG. 6, the method includes, but is not limited to, the following step.

In S106, a second indication value is obtained by processing a reference numeric count and a numeric count of FD basis vectors configured for each TRP of remaining TRPs or each TRP group of remaining TRP groups according to a second indication method. The second indication value indicates the index of the FD basis vector corresponding to each TRP of remaining TRPs or each TRP group of remaining TRP groups.

In the embodiments of the present invention, the codebook parameter information may further include a reference numeric count; and the numeric count of codebook parameters includes a numeric count of FD basis vectors configured for each TRP of remaining TRPs or each TRP group of remaining TRP groups.

The second indication method includes:

$$\left\lceil \log_2 C_{N_3}^{M_i} \right\rceil;$$

where $C_{N_3}^{M_i}$ represents selecting $M_i$ FD basis vectors from $N_3$ FD basis vectors, ⌈ ⌉ represents rounding up to an integer, $N_3$ represents the reference numeric count, $M_i$ represents the numeric count of FD basis vectors configured for each TRP of remaining TRPs or each TRP group of remaining TRP groups, i represents an index of a remaining TRP in the multiple TRPs or represents an index of each TRP group of remaining TRP groups of the multiple TRP groups.

The second indication value refers to a value obtained by processing the reference numeric count and the numeric count of FD basis vectors configured for each TRP of remaining TRPs or TRP group based on the second indication method.

In the embodiment, the second indication value is obtained by processing the reference numeric count and the numeric count of FD basis vectors configured for each TRP of remaining TRPs or each TRP group of remaining TRP groups according to the second indication method, where the second indication value indicates the index of the FD basis vector corresponding to each TRP of remaining TRPs or each TRP group of remaining TRP groups. In this way, the reference numeric count and the numeric count of FD basis vectors configured for each TRP of remaining TRPs or each TRP group of remaining TRP groups may be calculated and processed according to the second indication method, and an indication accuracy of the obtained second indication value for the index of the FD basis vector corresponding to the remaining TRP or the remaining TRP group may be effectively improved.

An embodiment of the present invention further provides an indication method, where the codebook parameter information further includes a reference numeric count, and the numeric count of codebook parameters includes a total numeric count of FD basis vectors configured for all of the multiple TRPs or TRP groups. Sending the indication information to the network device includes: sending the FD basis vector indication information according to the reference numeric count and/or the total numeric count of FD basis vectors, where the FD basis vector indication information indicates at least one of: the index of the FD basis vector corresponding to each TRP in the multiple TRPs, the index of the FD basis vector corresponding to each TRP group of the multiple TRP groups, the index of the relative FD basis vector corresponding to each TRP in the multiple TRPs, the index of the relative FD basis vector corresponding to each TRP group of the multiple TRP groups, or the index of the reference FD basis vector. In this way, an indication accuracy for sending the FD basis vector indication information may be effectively improved according to the reference numeric count and the total numeric count of FD basis vectors configured for all of the multiple TRPs or TRP groups.

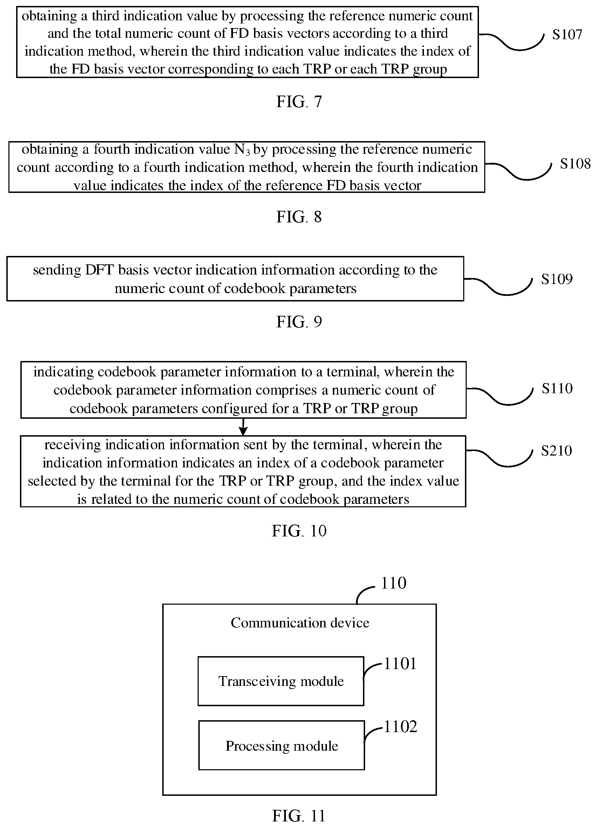

FIG. 7 is a flowchart of an indication method provided by a further embodiment of the present invention. The indication method in this embodiment may be applied in the terminal. As shown in FIG. 7, the method includes, but is not limited to, the following step.

In S107, a third indication value is obtained by processing a reference numeric count and a total numeric count of FD basis vectors according to a third indication method. The third indication value indicates the index of the FD basis vector corresponding to each TRP or each TRP group.

In the embodiments of the present invention, the codebook parameter information may further include the reference numeric count, and the numeric count of codebook parameters includes the total numeric count of FD basis vectors configured for all of the multiple TRPs or TRP groups.

The third indication method includes:

$$\left\lceil \log_2 C_{N_3-1}^{M-1} \right\rceil;$$

where $C_{N_3-1}^{M-1}$ represents selecting (M-1) FD basis vectors from (N_3-1) FD basis vectors, $\lceil \rceil$ represents rounding up to an integer, $N_3$ represents the reference numeric count, M represents the total numeric count of FD basis vectors configured for all of the multiple TRPs or TRP groups.

The third indication value refers to a value obtained by processing the reference numeric count and the total numeric count of FD basis vectors based on the above-mentioned third indication method.

In this embodiment, the third indication value is obtained by processing the reference numeric count and the total numeric count of FD basis vectors according to the third indication method, where the third indication value indicates the index of the FD basis vector corresponding to each TRP or each TRP group. In this way, an indication accuracy of the obtained third indication value for the index of the FD basis vector corresponding to each TRP or each TRP group may be effectively improved.

FIG. 8 is a flowchart of an indication method provided by a further embodiment of the present invention. The indication method in this embodiment may be applied in the terminal. As shown in FIG. 8, the method includes, but is not limited to, the following step.

In S108, a fourth indication value is obtained by processing a reference numeric count $N_3$ according to a fourth indication method. The fourth indication value indicates the index of the reference FD basis vector.

In the embodiments of the present invention, the codebook parameter information may further include the reference numeric count.

The fourth indication method includes:

$$\left\lceil \log_2 C_{N_3}^{1} \right\rceil;$$

where $C_{N_3}^1$ represents selecting one FD basis vector from $N_3$ FD basis vectors, $\lceil \rceil$ represents rounding up to an integer, and $N_3$ represents the reference numeric count.

The fourth indication value refers to a value obtained by processing the reference numeric count based on the fourth indication method.

In this embodiment, the fourth indication value is obtained by processing the reference numeric count according to the fourth indication method, where the fourth indication value indicates the index of the reference FD basis vector. In this way, an indication accuracy of the obtained fourth indication value for the index of the reference FD basis vector may be effectively improved.

An embodiment of the present invention further provides an indication method, where the reference TRP is one of: a TRP corresponding to a first layer 1 reference signal receiving power (L1-RSRP) with a maximum value among a plurality of first L1-RSRPs, and each first L1-RSRP corresponding to one respective TRP; a TRP corresponding to a first combination coefficient with a maximum amplitude among a plurality of first combination coefficients; a TRP corresponding to a maximum first reference amplitude among a plurality of first reference amplitudes; or a TRP corresponding to a minimum or maximum first description value among a plurality of first description values, and each first description value corresponding to one respective TRP. In this way, the reference TRP is suitable for personalized application scenarios and an applicability of the reference TRP in the indication process may be effectively improved.

The reference signal receiving power (RSRP) is a key parameter representing wireless signal strength in a long term evolution (LTE) cell network and one of physical layer measurement requirements. It is an average value of signal powers received by all resource particles carrying reference signals within a certain symbol. L1-RSRP refers to a reference signal receiving power corresponding to a physical layer. The first L1-RSRP refers to layer 1 reference signal receiving power corresponding to the TRP.

The combination coefficient refers to a coefficient jointly affected by multiple TRPs during the precoding process. The first combination coefficient refers to a combination coefficient corresponding to TRP.

The first reference amplitude refers to a coefficient amplitude corresponding to TRP.

An embodiment of the present invention further provides an indication method, where the first description value is one of: an index of an FD basis vector corresponding to the TRP; a resource identifier (ID) in a CSI-RS resource corresponding to the TRP; or a port group index corresponding to the TRP. In this way, richness of contents described by the first description value may be effectively improved to adapt to the personalized needs in the application scenarios.

The CSI-RS may be used to obtain channel state information, measure a channel between a base station and UE, and obtain the channel state information required for scheduling and link adaptation, such as a precoding matrix and channel quality information.

The resource ID refers to a label corresponding to a CSI-RS resource.

A port group refers to a port set composed of multiple ports.

An embodiment of the present invention further provides an indication method, where the reference TRP group is one of: a TRP group corresponding to a second L1-RSRP with a maximum value among a plurality of second L1-RSRPs, and each second L1-RSRP corresponding to one respective TRP group; a TRP group corresponding to a second combination coefficient with a maximum amplitude among a plurality of second combination coefficients; a TRP group corresponding to a maximum second reference amplitude among a plurality of second reference amplitudes; or a TRP group corresponding to a minimum or maximum second description value among a plurality of second description values, and each second description value corresponding to one respective TRP group. In this way, various methods for determining the reference TRP group may be provided for the indication process to adapt to the personalized needs in the application scenarios.

The second L1-RSRP refers to a layer 1 reference signal receiving power corresponding to the TRP group.

The second reference amplitude refers to a coefficient amplitude corresponding to TRP group.

The second combination coefficient refers to a combination coefficient corresponding to TRP group.

An embodiment of the present invention further provides an indication method, where the second description value is one of: an index of an FD basis vector corresponding to the TRP group; a resource ID in a CSI-RS resource corresponding to the TRP group; or a port group index corresponding to the TRP group. In this way, description effect of the second description value for the relevant information of the TRP group may be guaranteed.

An embodiment of the present invention further provides an indication method, where the SD basis vector or SD and FD basis vector pair indication information indicates at least one of: an index of an SD basis vector corresponding to each TRP; an index of an FD basis vector corresponding to each TRP; an index of an SD and FD basis vector pair corresponding to each TRP; an index of an SD basis vector corresponding to each TRP group; an index of an FD basis vector corresponding to each TRP group; or an index of an SD and FD basis vector pair corresponding to each TRP group. In this way, the indication effect of the joint indication information may be greatly improved to adapt to a personalized joint relationship among the SD basis vector, the FD basis vector and the SD and FD basis vector pair.

FIG. 9 is a flowchart of an indication method provided by a further embodiment of the present invention. The indication method in this embodiment may be applied in the terminal. As shown in FIG. 9, the method includes, but is not limited to, the following step.

In S109, DFT basis vector indication information is sent according to the numeric count of codebook parameters.

In the embodiments of the present invention, a basis vector may be a discrete Fourier transform (DFT) basis vector.

The basis vector may be an SD basis vector, an FD basis vector or a basis vector in an SD and FD basis vector pair, which is not limited herein.

The DFT basis vector indication information indicates at least one of: the index of the SD basis vector corresponding to each TRP; the index of the FD basis vector corresponding to each TRP; the index of the SD basis vector corresponding to each TRP group; or the index of the FD basis vector corresponding to each TRP group.

In this embodiment, the basis vector is a DFT basis vector, and the DFT basis vector indication information is sent according to the numeric count of codebook parameters, where the DFT basis vector indication information indicates one of: the index of the SD basis vector corresponding to each TRP; the index of the FD basis vector corresponding to each TRP; the index of the SD basis vector corresponding to each TRP group; or the index of the FD basis vector corresponding to each TRP group. In this way, when the basis vector is the DFT basis vector, the indication effect of the DFT basis vector indication information sent may be guaranteed.

An embodiment of the present invention further provides an indication method including: sending the SD and FD basis vector pair indication information according to the numeric count of codebook parameters, where the SD and FD basis vector pair indication information indicates at least one of: the index of the SD and FD basis vector pair corresponding to each TRP; or the index of the SD and FD basis vector pair corresponding to each TRP group. In this way, the indication accuracy of the SD and FD basis vector pair indication information for the SD and FD basis vector pair corresponding to each TRP and/or TRP group may be effectively improved.

An embodiment of the present invention further provides an indication method, where the numeric count of codebook parameters includes a numeric count of SD and FD basis vector pairs configured for each TRP or each TRP group, and a total numeric count of SD and FD basis vector pairs configured for all of the multiple TRPs or TRP groups. The method further includes: obtaining a fifth indication value by processing the total numeric count of SD and FD basis vector pairs and the numeric count of SD and FD basis vector pairs. The fifth indication value indicates an index of an SD and FD basis vector pair corresponding to each TRP or each TRP group. The fifth indication method includes:

$$\left\lceil \log_2 C_X^{Y_i} \right\rceil;$$

where $C_X^{Y_i}$ represents selecting $Y_i$ SD and FD basis vector pairs from X SD and FD basis vector pairs, $\lceil \ \rceil$ represents rounding up to an integer, X represents the total numeric count of SD and FD basis vector pairs configured for all of the multiple TRPs or TRP groups, $Y_i$ represents the numeric count of SD and FD basis vector pairs configured for each TRP or each TRP group, i represents an index of a TRP in the multiple TRPs or represents an index of each TRP group of the multiple TRP groups. In this way, an efficiency of obtaining the index may be improved while an accuracy of the index is guaranteed.

The fifth indication value refers to a value obtained according to the total numeric count of SD and FD basis vector pairs and the numeric count of SD and FD basis vector pairs configured for each TRP or each TRP group.

An embodiment of the present invention further provides an indication method, where if a basis vector is an eigenvector, eigenvector indication information may be reported in an explicit feedback manner. The method further includes: determining an amplitude and/or a phase corresponding to each coefficient in the eigenvector; and sending the eigenvector indication information according to the amplitude and/or the phase. The eigenvector indication information indicates one of: indication information for the amplitude corresponding to each coefficient; or indication information for the phase corresponding to each coefficient. In this way, based on the amplitude and/or the phase corresponding to each coefficient in the eigenvector, an indication effect of the indication information for the eigenvector may be effectively improved.

The eigenvector refers to a non-zero vector whose direction remains unchanged (i.e., it is conformal) and whose size remains unchanged or is multiplied by a scaling factor under a linear transformation.

An embodiment of the present invention further provides an indication method, if the basis vector is an eigenvector, the eigenvector indication information may be reported in an implicit feedback manner. The method further includes: determining a plurality of orthogonal basis vectors in the eigenvector, and a weight value corresponding to each orthogonal basis vector; and sending eigenvector indication information according to an orthogonal basis vector and a respective weight value. In this way, an importance degree of each orthogonal basis vector during a process of generating the index may be accurately quantified according to the weight value, thus effectively improving the indication effect of the eigenvector.

The orthogonal basis vector refer to basis vectors with an orthogonal relationship.

The weight value is used to quantitatively describe the importance of the corresponding orthogonal basis vector in the process of generating the index of the basis vector to which the eigenvector belongs.

An embodiment of the present invention further provides an indication method, further including: sending the indication information to the network device according to a first cycle; indicating a combination coefficient corresponding to a TRP to the network device according to a second cycle, where the first cycle is greater than the second cycle. In this way, it may be ensured that the network device obtains the combination coefficient corresponding to the TRP in time, effectively improving work efficiency for the network device in the indication process.

The first cycle refers to a transmission cycle pre-configured for the indication information. The second cycle refers to a transmission cycle pre-configured for the combination coefficient corresponding to the TRP.

An embodiment of the present invention further provides an indication method, where a plurality of data transmission layers exist, and the indication information satisfies at least one of: being the same as CSI-RS port indication information corresponding to each data transmission layer; being the same as SD basis vector indication information corresponding to each data transmission layer; being different from FD basis vector indication information corresponding to each data transmission layer; being the same as or different from SD and FD basis vector pair indication information corresponding to each data transmission layer, where a basis vector is a DFT basis vector; or being the same as SD and FD basis vector pair indication information corresponding to each data transmission layer, where a basis vector is an eigenvector. In this way, when the numeric count of data transmission layers is more than one, the adaptability of the indication information to the application scenario may be guaranteed.

Execution steps for the terminal may be described as follows.

1. According to the codebook parameter information configured at a network device side, the terminal reports at least one or more of port selection indication information, the SD basis vector indication information, the FD basis vector indication information or the SD and FD basis vector pair indication information. The codebook parameter information at least includes the numeric count of SD basis vectors, FD basis vectors or SD and FD basis vector pairs.

2. For the FD basis vector or the SD and FD basis vector pair indication information, the terminal reports the indication information via the following methods.

2-1. Reporting indication of the FD basis vector, where the FD basis vector is a DFT basis vector.

For Alt1 (i.e., for the above codebook structure Alt1), an FD basis vector indication information corresponding to one reference TRP/TRP group is reported. The indication information indicates that the terminal selects ($M_i$-1) FD basis vectors from ($N_3$-1) FD basis vectors. Then, the FD basis vector indication information corresponding to the remaining TRP/TRP group(s) is reported, and the indication information indicates that the terminal selects $M_i$ FD basis vectors from $N_3$ FD basis vectors.

For Alt2 (i.e., for the above codebook structure Alt2), an FD basis vector indication information corresponding to all TRP/TRP groups is reported. The indication information indicates that the terminal selects ($M$-1) FD basis vectors from ($N_3$-1) FD basis vectors. Optionally, the terminal reports one reference FD basis vector and a relative FD basis vector corresponding to each TRP/TRP group relative to the one reference FD basis vector. The reference basis vector indicates selecting one FD basis vector from N FD basis vectors via $\left\lceil \log_2^N \right\rceil$ bits For example, indexes of basis vectors selected for a certain TRP are 2, 3, 5, and 8. The terminal reports $\left\lceil \log_2^N \right\rceil$ bits, indicating that the index of the reference FD basis vector is 2. On this basis, relative indexes corresponding to the TRP are 0, 1, 3 and 6, that is, all indexes are reduced by 2 after offset.

(1) The reference TRP/TRP group is a TRP/TRP group corresponding to the maximum L1-RSRP received by the terminal.

(2) The reference TRP/TRP group is a TRP/TRP group corresponding to the strongest coefficient or the maximum reference amplitude. The strongest coefficient refers to a coefficient with the maximum amplitude among the combination coefficients. The maximum reference amplitude refers to the maximum reference amplitude among a plurality of reference amplitudes corresponding to multiple TRP/TRP groups.

(3) The reference TRP/TRP group is a TRP/TRP group corresponding to the basis vector with the minimum or maximum index among all FD basis vectors.

(4) The reference TRP/TRP group is a TRP/TRP group corresponding to the minimum or maximum resource ID among a plurality of CSI-RS resources, or corresponding to a port group with the minimum or maximum index among a plurality of port groups corresponding to one CSI-RS resource, or the reference TRP/TRP group is explicitly reported to gNB by the terminal through a bitmap of size $N_{Trp}$ or $\lceil \log_2^N \rceil$. $N_{Trp}$ indicates the numeric count of collaborative TRP/TRP groups.

Value of N may be a numeric count of PMI subbands or a size of a window, and the value of N is determined by parameters configured by the network side. When the candidate FD basis vector is within a window, the UE needs to report the starting position of the window corresponding to each TRP/TRP group. The UE indicates the starting position of the window corresponding to a TRP/TRP group through $\lceil \log_2^{N_{TRP}} \rceil$ bits Mi represents a FD basis vector corresponding to an i$^{th}$ TRP/TRP group, and M represents basis vectors corresponding to all TRP/TRP groups.

2-2. Joint reporting indication of SD and FD basis vectors (for codebook structure Alt1B), where the basis vector is a DFT basis vector.

Alt1: for each TRP/TRP group, the SD and FD basis vectors are indicated respectively, and a SD and FD basis vector pair of each TRP/TRP group selected by the terminal is indicated through a bitmap or a combinatorial number manner.

Alt2: for each TRP/TRP group, the SD and FD basis vector pair indication information is reported. The indication information indicates that the terminal selects $Y_i$ SD and FD basis vector pairs from X SD and FD basis vector pairs.

The above-mentioned FD basis vector may be selected from the $N_3$ candidate basis vectors, or selected from a window configured by the network side. When the latter is applied, the starting point of the window may be predefined, or may be reported by the terminal.

2-3. Joint reporting indication of SD, FD basis vectors or SD and FD basis vector pair (for codebook structure Alt1B), where the basis vector is an eigenvector.

Alt1: explicit feedback, the amplitude and the phase of each coefficient in the vector are reported independently and quantitatively.

Alt2: implicit feedback, each eigenvector is represented by a linear combination of S orthogonal basis vectors and weight values of the S basis vectors, where S is a positive integer. The orthogonal basis vector may have different types such as DFT, DCT, and polynomial.

3. When the basis vector in step 2 is an eigenvector, a feedback cycle of the basis vector is reported by the first cycle T1 or in an aperiodic triggering manner, and a corresponding combination coefficient $\tilde{W}_2$ is reported by the second cycle T2, where T1>T2.

4. When the basis vector is a DFT basis vector, the indication information in steps 1 and 2 may indicate the port, the SD basis vector, the FD basis vector, and the SD and FD basis vector pair selected by the terminal through a bitmap or combinatorial number.

FIG. 10 is a flowchart of an indication method provided by a further embodiment of the present invention. The indication method in this embodiment may be applied in a network device. As shown in FIG. 10, the method includes, but is not limited to, the following steps.

In S110, codebook parameter information is indicated to a terminal. The codebook parameter information includes a numeric count of codebook parameters configured for a TRP or TRP group.

It can be understood that in this embodiment of the present invention, the network device indicates the codebook parameter information to the terminal, and the obtained codebook parameter information may be used to instruct the terminal to configure the codebook parameter(s).

In S210, indication information sent by the terminal is received. The indication information indicates an index of a codebook parameter selected by the terminal for the TRP or TRP group, and the index is related to the numeric count of codebook parameters.

In this embodiment, the codebook parameter information is instructed to a terminal. The codebook parameter information includes the numeric count of codebook parameters configured for the TRP or TRP group, and the indication information sent by the terminal is received. The indication information indicates the index of the codebook parameter selected by the terminal for the TRP or TRP group, and the index is related to the numeric count of codebook parameters. Based on the codebook parameter information, adaptability of the indication information, sent by the terminal, to the application scenario may be guaranteed, indication effect of the indication information for the network device may be effectively improved, and indication overhead corresponding to the codebook parameter may be reduced.

An embodiment of the present invention further provides an indication method, where the codebook parameter includes at least one of: a frequency domain (FD) basis vector, a spatial domain (SD) basis vector, an SD and FD basis vector pair, or a channel state information-reference signal (CSI-RS) port. In this way, reliability of the indication process may be guaranteed.

The embodiments of the present invention further provide an indication method, where the numeric count of codebook parameters may include at least one of: a numeric count of FD basis vectors, a numeric count of SD basis vectors, a numeric count of SD and FD basis vector pairs, and a numeric count of CSI-RS ports, which is not limited herein.

The numeric count of SD basis vectors may be a numeric count of SD basis vectors configured for each TRP or TRP group. When indicating an index of the SD basis vector corresponding to each TRP or TRP group, the following method may be used.

1. The codebook structure is $W_1 \widetilde{W}_2 W_f^H$ , where $W_1$ consists of 2L SD basis vectors. For each of a first polarization direction and a second polarization direction, L identical SD basis vectors are provided. $W_f$ consists of M FD basis vectors. On this basis, selection and indication corresponding to the SD basis vector and the FD basis vector may be as follows.

1-1. Selection and indication of the SD basis vector

Selection method: the same SD basis vector(s) is selected for the two polarization directions, which corresponds to a rank of a data transmission layer, rank=v, and v data transmission layers utilize the same SD basis vector(s).

Indication method: L SD basis vectors selected by the UE are indicated based on $\left\lceil \log_2^{C_{N_1 N_2}^L} \right\rceil + \left\lceil \log_2^{O_1 O_2} \right\rceil$ bits, where $O_1$ and $O_2$ represent an oversampling factor of the SD basis vector in a horizontal direction and a vertical direction, respectively, $N_1 N_2$ represent a numeric count of antenna ports in the horizontal direction and the vertical direction, respectively, in a single polarization direction. $C_{N_1 N_2}^L$ represents combinatorial number calculation of selecting L SD basis vectors from $N_1 N_2$, and $\lceil x \rceil$ represents rounding x up to an integer.

1-2. The selection and indication of FD basis vector may also be as described below, which is not limited herein.

Selection method: all SD basis vectors correspond to the same FD basis vector, and each data transmission layer selects the same or different FD basis vectors.

Indication method: for any data transmission layer, when $N_3 \leq 19$, M FD basis vectors selected by the UE are indicated based on $\left\lceil \log_2^{C_{N_3-1}^{M-1}} \right\rceil$ . $N_3$ is the numeric count of PMI subbands. When $N_3 > 19$, the UE indicates the selected M FD basis vectors based on $\left\lceil \log_2^{C_{2M-1}^{M-1}} \right\rceil$ bits through a window with a size of 2M.

The numeric count of CSI-RS ports may be the numeric count of SD basis vectors configured for each TRP or TRP group, and when indicating an index of the SD basis vector(s) corresponding to each TRP or TRP group, the following method may be used.

2. The codebook structure is $W_1 \widetilde{W}_2 W_f^H$ , where $W_1$ consists of 2L unit basis vectors. For each of the first polarization direction and the second polarization direction, L identical unit basis vectors are provided.

2-1. Selection and indication of the CSI-RS port

Selection method: the same and continuous L CSI-RS ports are selected for the two polarization directions, and v data transmission layers utilize the same port(s).

Indication method: the indication is based on $\left\lceil \log_2 \left\lceil \frac{P_{CSI-RS}}{2d} \right\rceil \right\rceil$ bits, where $P_{CSI-RS}$ represents a numeric count of CSI-RS ports, $d \in \{1,2,3,4\}$, is a configurable parameter.

2-2. The indication of FD basis vector may be the same as Point 1-2, the selection and indication of FD basis vector, as described above.

3. The codebook structure is $W_1 \widetilde{W}_2 W_f^H$ , where $W_1$ consists of 2L unit basis vectors. For each of the first polarization direction and the second polarization direction, L identical unit basis vectors are provided.

3-1. Selection and indication of the CSI-RS port

Selection method: the same L CSI-RS ports are selected for the two polarization directions, and v data transmission layers select the same port(s).

Indication method: the indication is based on $\left\lceil \log_2 \binom{P_{CSI-RS}/2}{K_1/2} \right\rceil$ , where $K_1 = \alpha P_{CSI-RS}$, and $\alpha$ represents a configurable parameter.

3-2. The indication of the FD basis vector may also be as described below, which is not limited herein.

Selection method: all selected $K_1$ corresponds to the same FD basis vector(s), and v data transmission layer select the same FD basis vector(s).

Indication method: the indication is based on $\lceil \log_2(N-1) \rceil$ bits or report is not performed, where $N \in \{2,4\}$, is a configurable parameter.

An embodiment of the present invention further provides an indication method, where the indication information includes at least one of: FD basis vector indication information; SD basis vector indication information; SD and FD basis vector pair indication information; CSI-RS port indication information; indication information for a starting position of a window corresponding to each TRP of multiple TRPs, where a candidate FD basis vector is within one or more windows; or indication information for a starting position of a window corresponding to each TRP group of multiple TRP groups, where a candidate FD basis vector is within one or more windows. In this way, the flexibility and indication effect of the contents indicated by the indication information may be effectively improved.

An embodiment of the present invention further provides an indication method, where the FD basis vector indication information indicates at least one of: an index of an FD basis vector corresponding to a reference TRP; an index of an FD basis vector corresponding to a reference TRP group; an index of an FD basis vector corresponding to each TRP of remaining TRPs; an index of an FD basis vector corresponding to each TRP group of remaining TRP groups; an index of an FD basis vector corresponding to each TRP in the multiple TRPs; an index of an FD basis vector corresponding to each TRP group of the multiple TRP groups; an index of a relative FD basis vector corresponding to each TRP in the multiple TRPs; an index of a relative FD basis vector corresponding to each TRP group of the multiple TRP groups; or an index of a reference FD basis vector. The reference TRP and the remaining TRP belong to the multiple TRPs, the reference TRP group and the remaining TRP group belong to the multiple TRP groups, and the multiple TRPs or the multiple TRP groups provide a data service to the terminal. In this way, the indication effect of the FD basis vector indication information for indicating the relevant information of the FD basis vector may be effectively improved.

An embodiment of the present invention further provides an indication method, where the codebook parameter information further includes a reference numeric count, and the numeric count of codebook parameters is one of: a numeric count of FD basis vectors configured for each TRP or each TRP group; a total numeric count of FD basis vectors configured for all of the multiple TRPs or TRP groups; a numeric count of SD and FD basis vector pairs configured for each TRP or each TRP group; or a total numeric count of SD and FD basis vector pairs configured for all of the multiple TRPs or TRP groups. In this way, indication contents of the codebook parameter information may be enriched, and reliability of the indication process may be effectively improved.

An embodiment of the present invention further provides an indication method, where the reference numeric count is one of: a numeric count of precoding matrix indicators (PMIs), or a numeric count of FD basis vectors included in a sliding window. In this way, the reliability of the reference numeric count in the indication process may be guaranteed.

An embodiment of the present invention further provides an indication method, where the SD basis vector or SD and FD basis vector pair indication information indicates at least one of: an index of an SD basis vector corresponding to each TRP; an index of an FD basis vector corresponding to each TRP; an index of an SD and FD basis vector pair corresponding to each TRP; an index of an SD basis vector corresponding to each TRP group; an index of an FD basis vector corresponding to each TRP group; or an index of an SD and FD basis vector pair corresponding to each TRP group. In this way, the indication effect of the joint indication information of the SD basis vector, the FD basis vector and the SD and FD basis vector pair may be greatly improved in the personalized scenario.

The execution steps for the network device may be described as follows.

1. The network device configures the codebook parameter information for the terminal. The codebook parameter information indicates one or more of the numeric count of ports, the numeric count of SD basis vectors, the numeric count of FD basis vectors, and the numeric count of SD and FD basis vector pairs selected by the terminal. The parameter information corresponding to different TRPs configured on the network device may be the same or different.

2. The network uses the received the indication information and/or the basis vector information of the port selection, the SD basis vector, the FD basis vector or the SD and FD basis vector pair to calculate the precoding for data transmission according to a corresponding codebook structure.

It should be noted that the above steps are applicable to the indication reporting method corresponding to a single data transmission layer. A case where the numeric count of data transmission layers is more than one is described below.

Port selection: port indication information corresponding to each layer is the same.

SD basis vector: SD basis vector indication information corresponding to each layer is the same.

FD basis vector: FD basis vector indication information corresponding to each layer is different from each other.

When the basis vector is a DFT basis vector, for the SD and FD basis vector pair, the SD and FD basis vectors corresponding to each layer are the same or different.

When the basis vector is an eigenvector, for the SD and FD basis vector pair, the SD and FD basis vectors corresponding to each layer are the same.

For the above description, an example can be constructed as follows.

Example 1: reporting indication of the FD basis vector, where the FD basis vector is the DFT basis vector.

Assuming that N=2 TRPs provide the service to UE through the CJT. The network device gNB configures the numeric count $L_i$ of SD basis vectors and the numeric count $M_i$ of FD basis vectors corresponding to each TRP for the UE to be 4 and 4 respectively, and the numeric count of PMI subbands is $N_3 = 13$. The SD and FD basis vectors are DFT basis vectors, and the UE selects the SD and FD basis vectors corresponding to each TRP based on channels from different TRPs to the UE. For the FD basis vector, if the UE uses a traditional method to report the FD basis vector corresponding to each TRP separately, $N * \left\lceil \log_2^{C_{N_3}^{M_i}} \right\rceil = 20$ bits is required, where $C_{N_3}^{M_i}$ represents selecting $M_i$ FD basis vectors from $N_3$ FD basis vectors, and N represents the numeric count of TRPs or TRP groups.

For a codebook structure, the terminal may pre-agree a default FD basis vector with the network device. Assuming i=1 as a reference TRP, the terminal may indicate the remaining three FDs corresponding to the $i^{th}$ (first) TRP by $\left\lceil \log_2^{C_{N_3-1}^{M_i-1}} \right\rceil = 8bits$. For the (i=2)$^{th}$ TRP, the four FD basis vectors corresponding to this TRP are still indicated by $\left\lceil \log_2^{C_{N_3}^{M_i}} \right\rceil = 10$ bits. Therefore, this instruction reporting method may save 2 bits of overhead compared with the traditional method.

For another codebook structure, assuming that the gNB configures all TRPs for the UE and M = 5 FD basis vectors are selected. The UE indicates that the UE selects basis vectors from N = 12 FD basis vectors by bits, where the DFT basis vector with all elements being 1 is always selected.

Example 2: Joint reporting indication of the SD and FD basis vector pair, where the basis vectors are eigenvectors.

The FD basis vector is the eigenvector, and the $k^{th}$ eigenvector is $\mathbf{v}_k$. S orthogonal basis vectors are DFT basis vectors, and the $s^{th}$ DFT basis vector is $\mathbf{v}_s$. A matrix composed of the S basis vectors is $\boldsymbol{B}$, and for the S, a weight coefficient $\boldsymbol{c} = B^H \mathbf{v}_k$. The terminal reports indication information of S DFT basis vectors and S weight coefficient indication information to gNB, and gNB may use the obtained indication information to calculate the $k^{th}$ eigenvector through $\mathbf{v}_k = \boldsymbol{Bc}$. Similarly, based on the above method, the information of the SD basis vector and the SD and FD basis vectors being eigenvectors may be reported to the network device through an orthogonal basis vector and a respective weight value of the orthogonal basis vector.

FIG. 11 is a block diagram of a communication device provided by an embodiment of the present invention. The communication device 110 shown in FIG. 11 may include a transceiving module 1101 and a processing module 1102. The transceiving module 1101 may include a sending module and/or a receiving module. The sending module is configured to implement the sending function, and the receiving module is configured to implement the receiving function. The transceiving module 1101 may implement the sending function and/or the receiving function.

The communication device 110 may be a terminal (such as the terminal in the foregoing method embodiments), a device in the terminal, or a device that may be used in conjunction with the terminal. Alternatively, the communication device 110 may be a network device (such as the network device in the foregoing method embodiments), a device in the network device, or a device that may be used in conjunction with the network device.

The communication device 110, provided at a terminal side, includes: the transceiving module 1101 configured to: obtain codebook parameter information indicated by a network device, where the codebook parameter information includes a numeric count of codebook parameters configured for a transmission reception point (TRP) or TRP group; and send indication information to the network device, where the indication information indicates an index of a codebook parameter selected by the terminal for the TRP or TRP group, and the index is related to the numeric count of codebook parameters.

Optionally, the codebook parameter includes at least one of: a frequency domain (FD) basis vector; a spatial domain (SD) basis vector; an SD and FD basis vector pair; or a channel state information-reference signal (CSI-RS) port.

Optionally, the indication information includes at least one of: FD basis vector indication information; SD basis vector indication information; SD and FD basis vector pair indication information; CSI-RS port indication information; indication information for a starting position of a window corresponding to each TRP of multiple TRPs, where a candidate FD basis vector is within one or more windows; or indication information for a starting position of a window corresponding to each TRP group of multiple TRP groups, where a candidate FD basis vector is within one or more windows.

Optionally, the FD basis vector indication information indicates at least one of: an index of an FD basis vector corresponding to a reference TRP; an index of an FD basis vector corresponding to a reference TRP group; an index of an FD basis vector corresponding to each TRP of remaining TRPs; an index of an FD basis vector corresponding to each TRP group of remaining TRP groups; an index of an FD basis vector corresponding to each TRP in the multiple TRPs; an index of an FD basis vector corresponding to each TRP group of the multiple TRP groups; an index of a relative FD basis vector corresponding to each TRP in the multiple TRPs; an index of a relative FD basis vector corresponding to each TRP group of the multiple TRP groups; or an index of a reference FD basis vector; where the reference TRP and the remaining TRP belong to the multiple TRPs, the reference TRP group and the remaining TRP group belong to the multiple TRP groups, and the multiple TRPs or the multiple TRP groups provide a data service to the terminal.

Optionally, the device further includes: the processing module 1102 configured to obtain the index of the relative FD basis vector corresponding to each TRP by calculating a difference between the index of the FD basis vector corresponding to each TRP and the index of the reference FD basis vector; obtain the index of the relative FD basis vector corresponding to each TRP group by calculating a difference between the index of the FD basis vector corresponding to each TRP group and the index of the reference FD basis vector.

Optionally, the codebook parameter information further includes a reference numeric count, the numeric count of codebook parameters includes a numeric count of FD basis vectors configured for each TRP or each TRP group. The transceiving module 1101 is further configured to send the FD basis vector indication information to the network device according to the reference numeric count and the numeric count of FD basis vectors, where the FD basis vector indication information indicates at least one of: the index of the FD basis vector corresponding to the reference TRP; the index of the FD basis vector corresponding to the reference TRP group; the index of the FD basis vector corresponding to each TRP of remaining TRPs; or the index of the FD basis vector corresponding to each TRP group of remaining TRP groups.

Optionally, the codebook parameter information further includes a reference numeric count; the numeric count of codebook parameters includes a numeric count of FD basis vectors configured for the reference TRP or the reference TRP group. The processing module 1102 is further configured to obtain a first indication value by processing the reference numeric count and the numeric count of FD basis vectors configured for the reference TRP or reference TRP group according to a first indication method. The first indication value indicates the index of the FD basis vector corresponding to the reference TRP or the reference TRP group. The first indication method includes:

$$\left\lceil \log_2 C_{N_3-1}^{M_i-1} \right\rceil;$$

where $C_{N_3-1}^{M_i-1}$ represents selecting $(M_i-1)$ FD basis vectors from $(N_3-1)$ FD basis vectors, $\lceil \ \rceil$ represents rounding up to an integer, $N_3$ represents the reference numeric count, $M_i$ represents the numeric count of FD basis vectors configured for the reference TRP or reference TRP group, i represents an index of the reference TRP in the multiple TRPs or represents an index of the reference TRP group of the multiple TRP groups.

Optionally, the codebook parameter information further includes a reference numeric count; the numeric count of codebook parameters includes a numeric count of FD basis vectors configured for each TRP of remaining TRPs or each TRP group of remaining TRP groups. The processing module 1102 is further configured to obtain a second indication value by processing the reference numeric count and the numeric count of FD basis vectors configured for each TRP of remaining TRPs or each TRP group of remaining TRP groups according to a second indication method. The second indication value indicates the index of the FD basis vector corresponding to each TRP of remaining TRPs or each TRP group of remaining TRP groups. The second indication method includes:

$$\left\lceil \log_2 C_{N_3}^{M_i} \right\rceil;$$

where $C_{N_3}^{M_i}$ represents selecting $M_i$ FD basis vectors from $N_3$ FD basis vectors, $\lceil \ \rceil$ represents rounding up to an integer, $N_3$ represents the reference numeric count, $M_i$ represents the numeric count of FD basis vectors configured for each TRP of remaining TRPs or each TRP group of remaining TRP groups, i represents an index of a remaining TRP in the multiple TRPs or represents an index of each TRP group of remaining TRP groups of the multiple TRP groups.

Optionally, the codebook parameter information further includes a reference numeric count; the numeric count of codebook parameters includes a total numeric count of FD basis vectors configured for all of the multiple TRPs or TRP groups. The transceiving module 1101 is further configured to send the FD basis vector indication information according to the reference numeric count and/or the total numeric count of FD basis vectors, where the FD basis vector indication information indicates at least one of: the index of the FD basis vector corresponding to each TRP in the multiple TRPs; the index of the FD basis vector corresponding to each TRP group of the multiple TRP groups; the index of the relative FD basis vector corresponding to each TRP in the multiple TRPs; the index of the relative FD basis vector corresponding to each TRP group of the multiple TRP groups; or the index of the reference FD basis vector.

Optionally, the codebook parameter information further includes a reference numeric count; the numeric count of codebook parameters includes a total numeric count of FD basis vectors configured for all of the multiple TRPs or TRP groups. The processing module 1102 is further configured to obtain a third indication value by processing the reference numeric count and the total numeric count of FD basis vectors according to a third indication method, where the third indication value indicates the index of the FD basis vector corresponding to each TRP or each TRP group. The third indication method includes:

$$\left\lceil \log_2 C_{N_3-1}^{M-1} \right\rceil;$$

where $C_{N_3-1}^{M-1}$ represents selecting (M-1) FD basis vectors from ($N_3$-1) FD basis vectors, $\lceil \ \rceil$ represents rounding up to an integer, $N_3$ represents the reference numeric count, M represents the total numeric count of FD basis vectors configured for all of the multiple TRPs or TRP groups.

Optionally, the codebook parameter information further includes a reference numeric count. The processing module 1102 is further configured to obtain a fourth indication value by processing the reference numeric count according to a fourth indication method. The fourth indication value indicates the index of the reference FD basis vector. The fourth indication method includes:

$$\left\lceil \log_2 C_{N_3}^{1} \right\rceil;$$

where $C_{N_3}^{1}$ represents selecting one FD basis vector from $N_3$ FD basis vectors, $\lceil \ \rceil$ represents rounding up to an integer, and $N_3$ represents the reference numeric count.

Optionally, the reference numeric count is one of: a numeric count of precoding matrix indicators (PMIs); or a numeric count of FD basis vectors contained in a sliding window.

Optionally, the reference TRP is one of: a TRP corresponding to a first layer 1 reference signal receiving power (L1-RSRP) with a maximum value among a plurality of first L1-RSRPs, and each first L1-RSRP corresponding to one respective TRP; a TRP corresponding to a first combination coefficient with a maximum amplitude among a plurality of first combination coefficients; a TRP corresponding to a maximum first reference amplitude among a plurality of first reference amplitudes; or a TRP corresponding to a minimum or maximum first description value among a plurality of first description values, and each first description value corresponding to one respective TRP.

Optionally, the first description value is one of: an index of an FD basis vector corresponding to the TRP; a resource identifier (ID) in a CSI-RS resource corresponding to the TRP; or a port group index corresponding to the TRP.

Optionally, the reference TRP group is one of: a TRP group corresponding to a second L1-RSRP with a maximum value among a plurality of second L1-RSRPs, and each second L1-RSRP corresponding to one respective TRP group; a TRP group corresponding to a second combination coefficient with a maximum amplitude among a plurality of second combination coefficients; a TRP group corresponding to a maximum second reference amplitude among a plurality of second reference amplitudes; or a TRP group corresponding to a minimum or maximum second description value among a plurality of second description values, and each second description value corresponding to one respective TRP group.

Optionally, the second description value is one of: an index of an FD basis vector corresponding to the TRP group; a resource identifier (ID) in a CSI-RS resource corresponding to the TRP group; or a port group index corresponding to the TRP group.

Optionally, the SD basis vector or SD and FD basis vector pair indication information indicates at least one of: an index of an SD basis vector corresponding to each TRP; an index of an FD basis vector corresponding to each TRP; an index of an SD and FD basis vector pair corresponding to each TRP; an index of an SD basis vector corresponding to each TRP group; an index of an FD basis vector corresponding to each TRP group; or an index of an SD and FD basis vector pair corresponding to each TRP group.

Optionally, a basis vector is a discrete Fourier transform (DFT) basis vector, and the transceiving module 1101 is further configured to send DFT basis vector indication information according to the numeric count of codebook parameters. The DFT basis vector indication information indicates one of: the index of the SD basis vector corresponding to each TRP; the index of the FD basis vector corresponding to each TRP; the index of the SD basis vector corresponding to each TRP group; or the index of the FD basis vector corresponding to each TRP group.

Optionally, the transceiving module 1101 is further configured to send the SD and FD basis vector pair indication information according to the numeric count of codebook parameters. The SD and FD basis vector pair indication information indicates at least one of: the index of the SD and FD basis vector pair corresponding to each TRP; or the index of the SD and FD basis vector pair corresponding to each TRP group.

Optionally, the numeric count of codebook parameters includes a numeric count of SD and FD basis vector pairs configured for each TRP or each TRP group, and a total numeric count of SD and FD basis vector pairs configured for all of the multiple TRPs or TRP groups. The processing module 1102 is further configured to obtain a fifth indication value by processing the total numeric count of SD and FD basis vector pairs and the numeric count of SD and FD basis vector pairs. The fifth indication value indicates an index of an SD and FD basis vector pair corresponding to each TRP or each TRP group. The fifth indication method includes:

$$\left\lceil \log_2 C_X^{Y_i} \right\rceil;$$

where $C_X^{Y_i}$ represents selecting $Y_i$ SD and FD basis vector pairs from X SD and FD basis vector pairs, $\lceil \ \rceil$ represents rounding up to an integer, X represents the total numeric count of SD and FD basis vector pairs configured for all of the multiple TRPs or TRP groups, $Y_i$ represents the numeric count of SD and FD basis vector pairs configured for each TRP or each TRP group, i represents an index of a TRP in the multiple TRPs or represents an index of each TRP group of the multiple TRP groups.

Optionally, a basis vector is an eigenvector, and the processing module 1102 is further configured to: determine an amplitude and/or a phase corresponding to each coefficient in the eigenvector.

Optionally, the transceiving module 1101 is further configured to send eigenvector indication information according to the amplitude and/or the phase.

Optionally, the eigenvector indication information indicates one of: indication information for the amplitude corresponding to each coefficient; or indication information for the phase corresponding to each coefficient.

Optionally, the basis vector is an eigenvector, and the processing module 1102 is further configured to: determine a plurality of orthogonal basis vectors in the eigenvector, and a weight value corresponding to each orthogonal basis vector.

Optionally, the transceiving module 1101 is further configured to send eigenvector indication information according to an orthogonal basis vector and a respective weight value.

Optionally, the transceiving module 1101 is further configured to send the indication information to the network device according to a first cycle; indicate a combination coefficient corresponding to a TRP to the network device according to a second cycle, where the first cycle is greater than the second cycle.

Optionally, a plurality of data transmission layers exist; where the indication information satisfies at least one of: being the same as CSI-RS port indication information corresponding to each data transmission layer; being the same as SD basis vector indication information corresponding to each data transmission layer; being different from FD basis vector indication information corresponding to each data transmission layer; being the same as or different from SD and FD basis vector pair indication information corresponding to each data transmission layer, where a basis vector is a DFT basis vector; or being the same as SD and FD basis vector pair indication information corresponding to each data transmission layer, where a basis vector is an eigenvector.

By implementing the method of the present invention, the terminal may obtain the codebook parameter information indicated by the network device. The codebook parameter information includes the numeric count of the codebook parameters configured for the TRP or TRP group. The instruction information is sent to the network device. The indication information indicates the index of the codebook parameter selected by the terminal for the TRP or TRP group. The index is related to the numeric count of the codebook parameters. In this way, overhead of indication corresponding to the codebook parameter is reduced and an indication effect of the codebook parameter is effectively improved.

The communication device 110, provided at a network device side, includes: transceiving module 1101 configured to: indicate codebook parameter information to a terminal, where the codebook parameter information includes a numeric count of codebook parameters configured for a transmission reception point (TRP) or TRP group; and receive indication information sent by the terminal, where the indication information indicates an index of a codebook parameter selected by the terminal for the TRP or TRP group, and the index is related to the numeric count of codebook parameters.

Optionally, the codebook parameter includes at least one of: a frequency domain (FD) basis vector; a spatial domain (SD) basis vector; an SD and FD basis vector pair; or a channel state information-reference signal (CSI-RS) port.

Optionally, the indication information includes at least one of: FD basis vector indication information; SD basis vector indication information; SD and FD basis vector pair indication information; port indication information corresponding to a data transmission layer; indication information for a starting position of a window corresponding to each TRP of multiple TRPs, where a candidate FD basis vector is within one or more windows; or indication information for a starting position of a window corresponding to each TRP group of multiple TRP groups, where a candidate FD basis vector is within one or more windows.

Optionally, the FD basis vector indication information indicates at least one of: an index of an FD basis vector corresponding to a reference TRP; an index of an FD basis vector corresponding to a reference TRP group; an index of an FD basis vector corresponding to each TRP of remaining TRPs; an index of an FD basis vector corresponding to each TRP group of remaining TRP groups; an index of an FD basis vector corresponding to each TRP in the multiple TRPs; an index of an FD basis vector corresponding to each TRP group of the multiple TRP groups; an index of a relative FD basis vector corresponding to each TRP in the multiple TRPs; an index of a relative FD basis vector corresponding to each TRP group of the multiple TRP groups; or an index of a reference FD basis vector. The reference TRP and the remaining TRP belong to the multiple TRPs, the reference TRP group and the remaining TRP group belong to the multiple TRP groups, and the multiple TRPs or the multiple TRP groups provide a data service to the terminal.

Optionally, the codebook parameter information further includes a reference numeric count, and the numeric count of codebook parameters is one of: a numeric count of FD basis vectors configured for each TRP or each TRP group; a total numeric count of FD basis vectors configured for all of the multiple TRPs or TRP groups; a numeric count of SD and FD basis vector pairs configured for each TRP or each TRP group; or a total numeric count of SD and FD basis vector pairs configured for all of the multiple TRPs or TRP groups.

Optionally, the reference numeric count is one of: a numeric count of precoding matrix indications (PMIs); or a numeric count of FD basis vectors contained in a sliding window.

Optionally, the SD basis vector or SD and FD basis vector pair indication information indicates at least one of: an index of an SD basis vector corresponding to each TRP; an index of an FD basis vector corresponding to each TRP; an index of an SD and FD basis vector pair corresponding to each TRP; an index of an SD basis vector corresponding to each TRP group; an index of an FD basis vector corresponding to each TRP group; or an index of an SD and FD basis vector pair corresponding to each TRP group.

By implementing the method of the present invention, the network device may indicate the codebook parameter information to the terminal. The codebook parameter information includes the numeric count of codebook parameters configured for the TRP or TRP group, and the indication information sent by the terminal is received. The indication information indicates the index of the codebook parameter selected by the terminal for the TRP or TRP group, and the index is related to the numeric count of codebook parameters. Based on the codebook parameter information, adaptability of the indication information, sent by the terminal, to the application scenario may be guaranteed, indication effect of the indication information for the network device may be effectively improved, and indication overhead corresponding to the codebook parameter may be reduced.

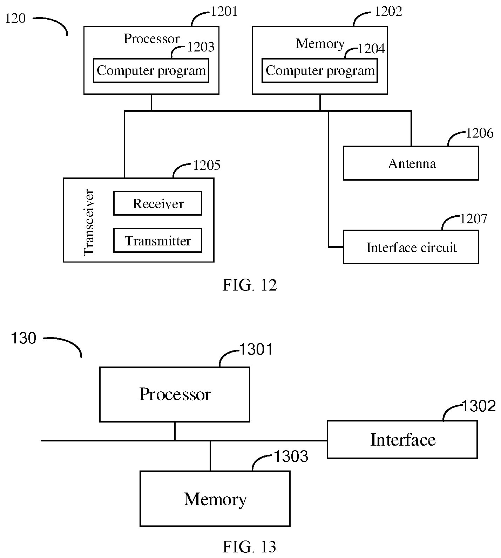

FIG. 12 is a block diagram of a communication device provided by another embodiment of the present invention. The communication device 120 may be a network device (such as the network device in the foregoing method embodiments), or a terminal (such as the terminal in the aforementioned method embodiments), or may be a chip, a chip system, or a processor that supports the network device to implement the above method, or may be a chip, a chip system, or a processor that supports the terminal to implement the above method. The device may be configured to implement the methods described in the above method embodiments, and the details may be referred to the description corresponding to the above method embodiments.

The communication device 120 may include at least one processor 1201. The processor 1201 may be a general-purpose processor or a special-purpose processor. For example, it may be a baseband processor or a central processing unit. The baseband processor may be configured to process communication protocols and communication data, and the central processing unit may be configured to control the communication device (such as a base station, a baseband chip, a terminal, a terminal chip, a DU or a CU), execute computer program(s), and process data for the computer program(s).

Optionally, the communication device 120 may further include at least one memory 1202, on which a computer program 1204 may be stored, and the processor 1201 may have stored a computer program 1203. The processor 1201 executes the computer program 1204 and/or the computer program 1203 to cause the communication device 120 to perform the method as described in the above method embodiments. Optionally, the memory 1202 may also have the data stored therein. The communication device 120 and the memory 1202 may be provided independently or integrated together.

Optionally, the communication device 120 may further include a transceiver 1205 and an antenna 1206. The transceiver 1205 may be referred to as a transceiving unit, a transceiver, or a transceiving circuit or the like for implementing a transceiving function. The transceiver 1205 may include a receiver and a transmitter, and the receiver may be referred to as a receiver or a receiving circuit or the like for implementing a receiving function; the transmitter may be referred to as a transmitter or a transmission circuit or the like for implementing a transmission function.

Optionally, the communication device 120 may further include one or more interface circuits 1207. The interface circuit 1207 is configured to receive and transmit the code instruction to the processor 1201. The processor 1201 executes the code instruction to enable the communication device 120 to perform the method described in any of the above method embodiments.

In an embodiment, the processor 1201 may further include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiver circuit, interface or interface circuit may be configured for transmission or transfer of signal.

In an embodiment, the processor 1201 may store a computer program 1203 that, when run on the processor 1201, enables the communication device 120 to perform the method described in any of the above method embodiments. The computer program 1203 may be solidified in the processor 1201, in which case the processor 1201 may be implemented in hardware.

In an embodiment, the communication device 120 may include a circuit that may perform the functions of transmitting or receiving or communicating in the foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the above embodiments may be the network device or the terminal, but the scope of the communication device described in the present invention is not limited thereto and the construction of the communication device is not limited by FIG. 12. The communication device may be a stand-alone device or may be a part of a larger device. For example, the communication device may be: (1) a stand-alone integrated circuit (IC), or a chip, or a chip system or a subsystem; (2) a set of one or more ICs, optionally the set of ICs may also include a storage component for storing the data and the computer program; (3) ASIC such as modem; (4) modules that may be embedded in other devices; (5) a receiver, a terminal device, an intelligent terminal device, a cellular phone, a wireless device, a handset, a mobile unit, an on-vehicle device, a network device, a cloud device, an artificial intelligence device, etc.; (6) others.

In a case where the communication device may be the chip or the chip system, a block diagram of the chip shown in FIG. 13 may be referred to. The chip shown in FIG. 13 may include a processor 1301 and an interface 1302. There may be at least one processor 1301 and multiple interfaces 1302.

In a case where the chip is configured to realize functions of the terminal in the embodiments of the present invention, the processor 1301 is configured to perform S103 and S203 in FIG. 3, or perform S105 in FIG. 5, or perform S106 in FIG. 6; the interface 1302 is configured to perform S102 and S202 in FIG. 2, or perform S104 in FIG. 4, or perform S109 in FIG. 9.

In a case where the chip is configured to realize functions of the network device in the embodiments of the present invention, the interface 1302 is configured to perform S110 and S210 in FIG. 10.

Optionally, the chip further includes a memory 1303 for storing necessary computer programs and data.

Those skilled in the art may further appreciate that the various illustrative logical blocks and steps described in embodiments of the present invention may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be understood as exceeding the scope of protection of the embodiments of the present invention.

The embodiments of the present invention further provide a communication system. The system includes the communication device as the network device (such as the network device in the foregoing method embodiments) and the communication device as the terminal (such as the terminal in the foregoing method embodiments) in the aforementioned embodiment shown in FIG. 11, or the system includes the communication device as the network device (such as the network device in the foregoing method embodiments) and the communication device as the terminal (such as the terminal in the foregoing method embodiments) in the aforementioned embodiment shown in FIG. 12.

The present invention further provides a readable storage medium storing thereon instructions that, and when executed by a computer, cause functions of any one of the above method embodiments to be realized.

The present invention further provides a computer program product that, when executed by the computer, cause functions of any one of the above method embodiments to be realized.

In the above embodiments, the present invention may be implemented in whole or in part by the hardware, software, firmware or their combination. When implemented in the software, the present invention may be implemented in whole or in part as the computer program product. The computer program product includes one or more computer programs. The computer programs, when loaded and executed on the computer, result in whole or in part in processes or functions according to embodiments of the present invention. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present invention are merely for convenience of description and are not intended to limit the scope of the embodiments of the present invention, which also represent a sequential order.

"At least one" in the present invention may also be described as one or more, and "multiple" may be two, three, four, or more, and the present invention is not limited thereto. In the embodiments of the present invention, regarding one technical feature, the technical features in the technical feature are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present invention may be configured or predefined. Values of information in each table are merely examples, and may be configured as other values, which is not limited in the present invention. In a case of configuring the correspondence between the information and each parameter, it is not necessarily required that all the correspondences shown in each table must be configured. For example, the correspondence shown in certain rows in the tables in the present invention may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a structure, a class, a heap, a hash table or a hash table.

"Predefined" in the present invention may be understood as determined, predetermined, stored, pre-stored, pre-negotiated, pre-configured, cured, or pre-fired.

Those skilled in the art may appreciate that units and algorithm steps of each example described in conjunction with the embodiments disclosed herein may be implemented with the electronic hardware, or combinations of the computer software and the electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present invention.

It will be clear to those skilled in the art that, for convenience and brevity of the description, specific working procedures of the above described systems, devices and units may be referred to corresponding procedures in the preceding method embodiments and will not be described in detail here.

The above description is only for the specific embodiments of the present invention, but the scope of the present invention is not limited thereto. Any person skilled in the art may easily think of changes or substitutions within the technical scope of the present invention, which shall be covered by the protection scope of the present invention. Therefore, the protection scope of the present application shall be in line with the attached claims.

**Claims**

1. An indication method, performed by a terminal, comprising:

   obtaining codebook parameter information indicated by a network device, wherein the codebook parameter information comprises a numeric count of codebook parameters configured for a transmission reception point (TRP) or TRP group; and
   sending indication information to the network device, wherein the indication information indicates an index of a codebook parameter selected by the terminal for the TRP or TRP group, and the index is related to the numeric count of codebook parameters.

2. The method according to claim 1, wherein the codebook parameter comprises at least one of:

a frequency domain (FD) basis vector;
a spatial domain (SD) basis vector;
an SD and FD basis vector pair; or
a channel state information-reference signal (CSI-RS) port.

3. The method according to any one of claims 1-2, wherein the indication information comprises at least one of:

FD basis vector indication information;
SD basis vector indication information;
SD and FD basis vector pair indication information;
CSI-RS port indication information;
indication information for a starting position of a window corresponding to each TRP of multiple TRPs, wherein a candidate FD basis vector is within one or more windows; or
indication information for a starting position of a window corresponding to each TRP group of multiple TRP groups, wherein a candidate FD basis vector is within one or more windows.

4. The method according to claim 3, wherein the FD basis vector indication information indicates at least one of:

an index of an FD basis vector corresponding to a reference TRP;
an index of an FD basis vector corresponding to a reference TRP group;
an index of an FD basis vector corresponding to each TRP of remaining TRPs;
an index of an FD basis vector corresponding to each TRP group of remaining TRP groups;
an index of an FD basis vector corresponding to each TRP in the multiple TRPs;
an index of an FD basis vector corresponding to each TRP group of the multiple TRP groups;
an index of a relative FD basis vector corresponding to each TRP in the multiple TRPs;
an index of a relative FD basis vector corresponding to each TRP group of the multiple TRP groups; or
an index of a reference FD basis vector;
wherein the reference TRP and the remaining TRP belong to the multiple TRPs, the reference TRP group and the remaining TRP group belong to the multiple TRP groups, and the multiple TRPs or the multiple TRP groups provide a data service to the terminal.

5. The method according to claim 4, further comprising:

obtaining the index of the relative FD basis vector corresponding to each TRP by calculating a difference between the index of the FD basis vector corresponding to each TRP and the index of the reference FD basis vector;
obtaining the index of the relative FD basis vector corresponding to each TRP group by calculating a difference between the index of the FD basis vector corresponding to each TRP group and the index of the reference FD basis vector.

6. The method according to claim 4, wherein the codebook parameter information further comprises a reference numeric count; the numeric count of codebook parameters comprises a numeric count of FD basis vectors configured for each TRP or each TRP group; and
wherein sending the indication information to the network device comprises:
sending the FD basis vector indication information to the network device according to the reference numeric count and the numeric count of FD basis vectors, wherein the FD basis vector indication information indicates at least one of:

the index of the FD basis vector corresponding to the reference TRP;
the index of the FD basis vector corresponding to the reference TRP group;
the index of the FD basis vector corresponding to each TRP of remaining TRPs; or
the index of the FD basis vector corresponding to each TRP group of remaining TRP groups.

7. The method according to claim 4, wherein the codebook parameter information further comprises a reference numeric count; the numeric count of codebook parameters comprises a numeric count of FD basis vectors configured for the reference TRP or the reference TRP group; and
the method further comprises:

obtaining a first indication value by processing the reference numeric count and the numeric count of FD basis vectors configured for the reference TRP or reference TRP group according to a first indication method, wherein the first indication value indicates the index of the FD basis vector corresponding to the reference TRP or the reference TRP group,

wherein the first indication method comprises:

$$\left\lceil \log_2 C_{N_3-1}^{M_i-1} \right\rceil;$$

where $C_{N_3-1}^{M_i-1}$ represents selecting $(M_i-1)$ FD basis vectors from $(N_3-1)$ FD basis vectors, $\lceil \ \rceil$ represents rounding up to an integer, $N_3$ represents the reference numeric count, $M_i$ represents the numeric count of FD basis vectors configured for the reference TRP or reference TRP group, i represents an index of the reference TRP in the multiple TRPs or represents an index of the reference TRP group of the multiple TRP groups.

8. The method according to claim 4, wherein the codebook parameter information further comprises a reference numeric count; the numeric count of codebook parameters comprises a numeric count of FD basis vectors configured for each TRP of remaining TRPs or each TRP group of remaining TRP groups; and
   the method further comprises:

   obtaining a second indication value by processing the reference numeric count and the numeric count of FD basis vectors configured for each TRP of remaining TRPs or each TRP group of remaining TRP groups according to a second indication method, wherein the second indication value indicates the index of the FD basis vector corresponding to each TRP of remaining TRPs or each TRP group of remaining TRP groups,
   wherein the second indication method comprises:

$$\left\lceil \log_2 C_{N_3}^{M_i} \right\rceil;$$

   where $C_{N_3}^{M_i}$ represents selecting $M_i$ FD basis vectors from $N_3$ FD basis vectors, $\lceil \ \rceil$ represents rounding up to an integer, $N_3$ represents the reference numeric count, $M_i$ represents the numeric count of FD basis vectors configured for each TRP of remaining TRPs or each TRP group of remaining TRP groups, i represents an index of a remaining TRP in the multiple TRPs or represents an index of each TRP group of remaining TRP groups of the multiple TRP groups.

9. The method according to claim 4, wherein the codebook parameter information further comprises a reference numeric count; the numeric count of codebook parameters comprises a total numeric count of FD basis vectors configured for all of the multiple TRPs or TRP groups; and
   wherein sending the indication information to the network device comprises:

   sending the FD basis vector indication information according to the reference numeric count and/or the total numeric count of FD basis vectors, wherein the FD basis vector indication information indicates at least one of:
   the index of the FD basis vector corresponding to each TRP in the multiple TRPs;
   the index of the FD basis vector corresponding to each TRP group of the multiple TRP groups;
   the index of the relative FD basis vector corresponding to each TRP in the multiple TRPs;
   the index of the relative FD basis vector corresponding to each TRP group of the multiple TRP groups; or
   the index of the reference FD basis vector.

10. The method according to claim 4, wherein the codebook parameter information further comprises a reference numeric count; the numeric count of codebook parameters comprises a total numeric count of FD basis vectors configured for all of the multiple TRPs or TRP groups; and
    the method further comprises:

    obtaining a third indication value by processing the reference numeric count and the total numeric count of FD basis vectors according to a third indication method, wherein the third indication value indicates the index of the FD basis vector corresponding to each TRP or each TRP group,
    wherein the third indication method comprises:

$$\left\lceil \log_2^{C_{N_3-1}^{M-1}} \right\rceil;$$

where $C_{N_3-1}^{M-1}$ represents selecting (M-1) FD basis vectors from ($N_3$-1) FD basis vectors, $\lceil \rceil$ represents rounding up to an integer, $N_3$ represents the reference numeric count, M represents the total numeric count of FD basis vectors configured for all of the multiple TRPs or TRP groups.

11. The method according to claim 4, wherein the codebook parameter information further comprises a reference numeric count; and
the method further comprises:

   obtaining a fourth indication value by processing the reference numeric count according to a fourth indication method, wherein the fourth indication value indicates the index of the reference FD basis vector,
   wherein the fourth indication method comprises:

$$\left\lceil \log_2^{C_{N_3}^{1}} \right\rceil;$$

   where $C_{N_3}^{1}$ represents selecting one FD basis vector from $N_3$ FD basis vectors, $\lceil \rceil$ represents rounding up to an integer, and $N_3$ represents the reference numeric count.

12. The method according to any one of claims 6-11, wherein the reference numeric count is one of:

   a numeric count of precoding matrix indicators (PMIs); or
   a numeric count of FD basis vectors contained in a sliding window.

13. The method according to claim 4, wherein the reference TRP is one of:

   a TRP corresponding to a first layer 1 reference signal receiving power (L1-RSRP) with a maximum value among a plurality of first L1-RSRPs, and each first L1-RSRP corresponding to one respective TRP;
   a TRP corresponding to a first combination coefficient with a maximum amplitude among a plurality of first combination coefficients;
   a TRP corresponding to a maximum first reference amplitude among a plurality of first reference amplitudes; or
   a TRP corresponding to a minimum or maximum first description value among a plurality of first description values, and each first description value corresponding to one respective TRP.

14. The method according to claim 13, wherein the first description value is one of:

   an index of an FD basis vector corresponding to the TRP;
   a resource identifier (ID) in a CSI-RS resource corresponding to the TRP; or
   a port group index corresponding to the TRP.

15. The method according to claim 4, wherein the reference TRP group is one of:

   a TRP group corresponding to a second L1-RSRP with a maximum value among a plurality of second L1-RSRPs, and each second L1-RSRP corresponding to one respective TRP group;
   a TRP group corresponding to a second combination coefficient with a maximum amplitude among a plurality of second combination coefficients;
   a TRP group corresponding to a maximum second reference amplitude among a plurality of second reference amplitudes; or
   a TRP group corresponding to a minimum or maximum second description value among a plurality of second description values, and each second description value corresponding to one respective TRP group.

16. The method according to claim 15, wherein the second description value is one of:

an index of an FD basis vector corresponding to the TRP group;
a resource identifier (ID) in a CSI-RS resource corresponding to the TRP group; or
a port group index corresponding to the TRP group.

17. The method according to claim 3, wherein the SD basis vector or SD and FD basis vector pair indication information indicates at least one of:

an index of an SD basis vector corresponding to each TRP;
an index of an FD basis vector corresponding to each TRP;
an index of an SD and FD basis vector pair corresponding to each TRP;
an index of an SD basis vector corresponding to each TRP group;
an index of an FD basis vector corresponding to each TRP group; or
an index of an SD and FD basis vector pair corresponding to each TRP group.

18. The method according to claim 17, wherein a basis vector is a discrete Fourier transform (DFT) basis vector, and sending the indication information to the network device comprises:
sending DFT basis vector indication information according to the numeric count of codebook parameters, wherein the DFT basis vector indication information indicates one of:

the index of the SD basis vector corresponding to each TRP;
the index of the FD basis vector corresponding to each TRP;
the index of the SD basis vector corresponding to each TRP group; or
the index of the FD basis vector corresponding to each TRP group.

19. The method according to claim 18, wherein sending the indication information to the network device comprises:
sending the SD and FD basis vector pair indication information according to the numeric count of codebook parameters, wherein the SD and FD basis vector pair indication information indicates at least one of:

the index of the SD and FD basis vector pair corresponding to each TRP; or
the index of the SD and FD basis vector pair corresponding to each TRP group.

20. The method according to claim 3, wherein the numeric count of codebook parameters comprises a numeric count of SD and FD basis vector pairs configured for each TRP or each TRP group, and a total numeric count of SD and FD basis vector pairs configured for all of the multiple TRPs or TRP groups; and
the method further comprises:

obtaining a fifth indication value by processing the total numeric count of SD and FD basis vector pairs and the numeric count of SD and FD basis vector pairs, wherein the fifth indication value indicates an index of an SD and FD basis vector pair corresponding to each TRP or each TRP group,
wherein a fifth indication method comprises:

$$\left\lceil \log_2 C_X^{Y_i} \right\rceil;$$

where $C_X^{Y_i}$ represents selecting $Y_i$ SD and FD basis vector pairs from X SD and FD basis vector pairs, $\lceil \ \rceil$ represents rounding up to an integer, X represents the total numeric count of SD and FD basis vector pairs configured for all of the multiple TRPs or TRP groups, $Y_i$ represents the numeric count of SD and FD basis vector pairs configured for each TRP or each TRP group, i represents an index of a TRP in the multiple TRPs or represents an index of each TRP group of the multiple TRP groups.

21. The method according to claim 3, wherein a basis vector is an eigenvector, and the method further comprises:

determining an amplitude and/or a phase corresponding to each coefficient in the eigenvector; and
sending eigenvector indication information according to the amplitude and/or the phase;
wherein the eigenvector indication information indicates one of:

indication information for the amplitude corresponding to each coefficient; or

indication information for the phase corresponding to each coefficient.

22. The method according to claim 3, wherein the basis vector is an eigenvector, and the method further comprises:

determining a plurality of orthogonal basis vectors in the eigenvector, and a weight value corresponding to each orthogonal basis vector; and

sending eigenvector indication information according to an orthogonal basis vector and a respective weight value.

23. The method according to claim 3, further comprising:

sending the indication information to the network device according to a first cycle;

indicating a combination coefficient corresponding to a TRP to the network device according to a second cycle, wherein the first cycle is greater than the second cycle.

24. The method according to claim 3, wherein a plurality of data transmission layers exist;
wherein the indication information satisfies at least one of:

being the same as CSI-RS port indication information corresponding to each data transmission layer;

being the same as SD basis vector indication information corresponding to each data transmission layer;

being different from FD basis vector indication information corresponding to each data transmission layer;

being the same as or different from SD and FD basis vector pair indication information corresponding to each data transmission layer, wherein a basis vector is a DFT basis vector; or

being the same as SD and FD basis vector pair indication information corresponding to each data transmission layer, wherein a basis vector is an eigenvector.

25. An indication method, performed by a network device, comprising:

indicating codebook parameter information to a terminal, wherein the codebook parameter information comprises a numeric count of codebook parameters configured for a transmission reception point (TRP) or TRP group; and

receiving indication information sent by the terminal, wherein the indication information indicates an index of a codebook parameter selected by the terminal for the TRP or TRP group, and the index is related to the numeric count of codebook parameters.

26. The method according to claim 25, wherein the codebook parameter comprises at least one of:

a frequency domain (FD) basis vector;

a spatial domain (SD) basis vector;

an SD and FD basis vector pair; or

a channel state information-reference signal (CSI-RS) port.

27. The method according to any one of claims 25-26, wherein the indication information comprises at least one of:

FD basis vector indication information;

SD basis vector indication information;

SD and FD basis vector pair indication information;

port indication information corresponding to a data transmission layer;

indication information for a starting position of a window corresponding to each TRP of multiple TRPs, wherein a candidate FD basis vector is within one or more windows; or

indication information for a starting position of a window corresponding to each TRP group of multiple TRP groups, wherein a candidate FD basis vector is within one or more windows.

28. The method according to claim 27, wherein the FD basis vector indication information indicates at least one of:

an index of an FD basis vector corresponding to a reference TRP;

an index of an FD basis vector corresponding to a reference TRP group;

an index of an FD basis vector corresponding to each TRP of remaining TRPs;
an index of an FD basis vector corresponding to each TRP group of remaining TRP groups;
an index of an FD basis vector corresponding to each TRP in the multiple TRPs;
an index of an FD basis vector corresponding to each TRP group of the multiple TRP groups;
an index of a relative FD basis vector corresponding to each TRP in the multiple TRPs;
an index of a relative FD basis vector corresponding to each TRP group of the multiple TRP groups; or
an index of a reference FD basis vector;
wherein the reference TRP and the remaining TRP belong to the multiple TRPs, the reference TRP group and the remaining TRP group belong to the multiple TRP groups, and the multiple TRPs or the multiple TRP groups provide a data service to the terminal.

29. The method according to claim 28, wherein the codebook parameter information further comprises a reference numeric count, and the numeric count of codebook parameters is one of:

a numeric count of FD basis vectors configured for each TRP or each TRP group;
a total numeric count of FD basis vectors configured for all of the multiple TRPs or TRP groups;
a numeric count of SD and FD basis vector pairs configured for each TRP or each TRP group; or
a total numeric count of SD and FD basis vector pairs configured for all of the multiple TRPs or TRP groups.

30. The method according to claim 29, wherein the reference numeric count is one of:

a numeric count of precoding matrix indications (PMIs); or
a numeric count of FD basis vectors contained in a sliding window.

31. The method according to claim 27, wherein the SD basis vector or SD and FD basis vector pair indication information indicates at least one of:

an index of an SD basis vector corresponding to each TRP;
an index of an FD basis vector corresponding to each TRP;
an index of an SD and FD basis vector pair corresponding to each TRP;
an index of an SD basis vector corresponding to each TRP group;
an index of an FD basis vector corresponding to each TRP group; or
an index of an SD and FD basis vector pair corresponding to each TRP group.

32. A communication device, comprising:
a transceiving module configured to:

obtain codebook parameter information indicated by a network device, wherein the codebook parameter information comprises a numeric count of codebook parameters configured for a transmission reception point (TRP) or TRP group; and
send indication information to the network device, wherein the indication information indicates an index of a codebook parameter selected by the terminal for the TRP or TRP group, and the index is related to the numeric count of codebook parameters.

33. A communication device, comprising:
a transceiving module configured to:

indicate codebook parameter information to a terminal, wherein the codebook parameter information comprises a numeric count of codebook parameters configured for a transmission reception point (TRP) or TRP group; and
receive indication information sent by the terminal, wherein the indication information indicates an index of a codebook parameter selected by the terminal for the TRP or TRP group, and the index is related to the numeric count of codebook parameters.

34. A communication system, comprising:

a terminal configured to perform the method according to any one of claims 1-24, and
a network device configured to perform the method according to any one of claims 25-31.

**35.** A computer-readable storage medium having stored therein instructions that, when executed, cause the method of any one of claims 1-31 to be implemented.

Network device 101    Terminal 102

FIG. 1

| obtaining codebook parameter information indicated by a network device, wherein the codebook parameter information comprises a numeric count of codebook parameters configured for a transmission reception point (TRP) or TRP group | S102 |

| sending indication information to the network device, wherein the indication information indicates an index of a codebook parameter selected by the terminal for the TRP or TRP group, and the index is related to the numeric count of codebook parameters | S202 |

FIG. 2

| obtaining the index of the relative FD basis vector corresponding to each TRP by calculating a difference between the index of the FD basis vector corresponding to each TRP and the index of the reference FD basis vector | S103 |

| obtaining the index of the relative FD basis vector corresponding to each TRP group by calculating a difference between the index of the FD basis vector corresponding to each TRP group and the index of the reference FD basis vector | S203 |

FIG. 3

| sending the FD basis vector indication information to the network device according to the reference numeric count and the numeric count of FD basis vectors | S104 |

FIG. 4

| obtaining a first indication value by processing the reference numeric count and the numeric count of FD basis vectors configured for the reference TRP or reference TRP group according to a first indication method, wherein the first indication value indicates the index of the FD basis vector corresponding to the reference TRP or the reference TRP group | S105 |

FIG. 5

| obtaining a second indication value by processing the reference numeric count and the numeric count of FD basis vectors configured for each remaining TRP or each remaining TRP group according to a second indication method, wherein the second indication value indicates the index of the FD basis vector corresponding to each remaining TRP or each remaining TRP group | S106 |

FIG. 6

obtaining a third indication value by processing the reference numeric count and the total numeric count of FD basis vectors according to a third indication method, wherein the third indication value indicates the index of the FD basis vector corresponding to each TRP or each TRP group

S107

FIG. 7

obtaining a fourth indication value $N_3$ by processing the reference numeric count according to a fourth indication method, wherein the fourth indication value indicates the index of the reference FD basis vector

S108

FIG. 8

sending DFT basis vector indication information according to the numeric count of codebook parameters

S109

FIG. 9

indicating codebook parameter information to a terminal, wherein the codebook parameter information comprises a numeric count of codebook parameters configured for a TRP or TRP group

S110

receiving indication information sent by the terminal, wherein the indication information indicates an index of a codebook parameter selected by the terminal for the TRP or TRP group, and the index value is related to the numeric count of codebook parameters

S210

FIG. 10

110

Communication device

Transceiving module
1101

Processing module
1102

FIG. 11

120

1201

Processor 1203

Computer program

1202

Memory 1204

Computer program

1206

Antenna

1205

Transceiver

Receiver

Transmitter

1207

Interface circuit

FIG. 12

130

1301

Processor

1302

Interface

1303

Memory

FIG. 13

## INTERNATIONAL SEARCH REPORT

| International application No. |
| --- |
| **PCT/CN2022/109262** |

| A. | CLASSIFICATION OF SUBJECT MATTER |
| --- | --- |

H04L27/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L; H04B; H04W

Documentation searched other than minimum documentation to the extent that such documents are included in the fields searched

Electronic data base consulted during the international search (name of data base and, where practicable, search terms used)

CNTXT; VEN; CNKI; 3GPP: 传输接收点, 码本, 配置, 选择, 索引, 基, 频域, 空域, TRP, codebook, configuration, select, index, basis, FD, SD

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 108023624 A (HUAWEI TECHNOLOGIES CO., LTD.) 11 May 2018 (2018-05-11) description, paragraphs [0007]-[0183] | 1, 25, 32-35 |
| X | CN 112368948 A (NEC CORP.) 12 February 2021 (2021-02-12) description, paragraphs [0038]-[0112] | 1, 25, 32-35 |
| A | CN 114142899 A (COMBA NETWORK SYSTEMS CO., LTD.) 04 March 2022 (2022-03-04) entire document | 1-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 February 2023** | **23 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/109262**

| Patent document cited in search report | | | Publication date (day/month/year) | Patent family member(s) | | | Publication date (day/month/year) |
|---|---|---|---|---|---|---|---|
| CN | 108023624 | A | 11 May 2018 | US | 2019260453 | A1 | 22 August 2019 |
| | | | | US | 10924174 | B2 | 16 February 2021 |
| | | | | JP | 2019537874 | A | 26 December 2019 |
| | | | | EP | 3506522 | A1 | 03 July 2019 |
| | | | | EP | 3506522 | A4 | 31 July 2019 |
| CN | 112368948 | A | 12 February 2021 | None | | | |
| CN | 114142899 | A | 04 March 2022 | None | | | |

Form PCT/ISA/210 (patent family annex) (July 2022)